# EUROPÄISCHE PATENTSCHRIFT

(11) **EP 3 017 112 B1**
(45) Veröffentlichungstag und Bekanntmachung des Hinweises auf die Patenterteilung: **22.08.2018**
(21) Anmeldenummer: 14726597.9
(22) Anmeldetag: 27.05.2014
(51) Int. Cl.: D21G 1/02, C08L 27/22, D21F 3/08, B31F 1/28

(54) **WALZE**
ROLL
ROULEAU

(30) Priorität: 04.07.2013 DE 102013213055
(43) Veröffentlichungstag der Anmeldung: 11.05.2016
(73) Patentinhaber: Voith Patent GmbH, 89522 Heidenheim (DE)
(72) Erfinder: HORAK, Anton, A-1140 Wien (AT); KNOLL, Friedrich, A-1220 Wien (AT)
(86) Internationale Anmeldenummer: PCT/EP2014/060876
(87) Internationale Veröffentlichungsnummer: WO 2015/000642

(56) Entgegenhaltungen:
- EP-A1- 0 439 843
- EP-A1- 1 428 655
- DE-A1-102010 038 286
- DE-B3-102012 205 227
- MUSTO P ET AL: "Cure kinetics and ultimate properties of a tetrafunctional epoxy resin toughened by a perfluoro-ether oligomer", POLYMER, ELSEVIER SCIENCE PUBLISHERS B.V, GB, Bd. 42, Nr. 12, 1. Juni 2001 (2001-06-01), Seiten 5189-5198, XP004230983, ISSN: 0032-3861, DOI: 10.1016/S0032-3861(00)00884-3

## Beschreibung

Die vorliegende Erfindung betrifft einen insbesondere für eine Walze zur Behandlung einer Papier-, Karton-, Tissue- oder einer anderen Faserstoffbahn in einer Maschine zur Herstellung und/oder Veredlung derselben geeigneten Walzenbezug, eine diesen Walzenbezug umfassende Walze, deren Verwendung in dem Kalander einer Papier-, Karton- oder Tissuemaschine.

DE102010038286 A1 offenbart modifzierte Perfluor Kunststoffe mit kovalenter Bindung für die Verwendung in Farben, Lacken und Schmierstoffen. EP1428655 A1 offenbart einen wechselbaren Mantel, der auf eine Riffelwalze einer Maschine zur Herstellung von Wellpappe aufziehbar ist. Der Mantel umfasst mehrere Schichten, von denen eine ein Vlies als Verstärkungsmaterial aufweist. Das Vlies ist dabei in einem als Matrix dienenden Epoxidharz eingebettet. Das Epoxidharz umfasst

DE102012205227B3 offenbart eine Kalanderwalze mit oberer Epoxidharzschicht, gemäß dem Oberbegriff des vorliegenden Anspruchs 1. Bei der Papierherstellung werden bei einer Vielzahl von Verfahrensschritten Walzen eingesetzt, wie beispielsweise bei der Blattbildung in der Siebpartie der Papiermaschine, bei dem Entwässern in der Presspartie der Papiermaschine und bei dem Streichen, Trocknen sowie Glätten in der Endpartie der Papiermaschine. Bei ihrer Verwendung befinden sich die Oberflächen der Walzen in manchen Positionen in nahezu ständigem Kontakt mit den Papierbahnen, weswegen diese unter anderem eine hohe mechanische Beständigkeit aufweisen müssen. Abgesehen davon müssen diese eine niedrige Rissanfälligkeit, eine hohe Schlagfestigkeit, eine gute Reißfestigkeit, eine hohe Weiterreißfestigkeit, eine hohe Druckfestigkeit und eine ausreichend hohe Härte aufweisen. Gleichzeitig müssen die Walzen ausreichend abrasionsbeständig und verschleißfest sein, um eine möglichst lange Lebensdauer aufzuweisen. Um den Oberflächen von Walzen die für ihre Verwendung erforderlichen anwendungstechnischen Eigenschaften zu verleihen, werden Walzen an ihrer Oberfläche üblicherweise mit einem auf einem Walzenkern angeordneten Walzenbezug versehen, dessen Material im Hinblick auf die erforderlichen anwendungstechnischen Eigenschaften formuliert wird. Üblicherweise sind derartige Walzenbezüge aus Verbundwerkstoffen zusammengesetzt, welche eine Matrix aus einem Elastomer oder einer Mischung aus zwei oder mehr Elastomeren, insbesondere Epoxidharz, Polyurethanharz, Gummi oder dergl., enthalten, in welche ein oder mehrere Füllstoffe und/oder Fasern eingebettet sind.

Besondere Anforderungen werden beispielsweise an Walzen gestellt, die in dem Kalanderabschnitt einer Papier-, Karton-, Tissuemaschine angeordnet sind. In dem Kalanderabschnitt einer Papiermaschine wird die Papierbahn geglättet und dieser Glanz verliehen, indem die Papierbahn unter hohem Druck und bei erhöhter Temperatur über Kalanderwalzen geführt wird. Um ihren Zweck, nämlich Glätte und Glanz zu erzeugen, erfüllen zu können, weisen Kalanderwalzen eine Oberfläche auf, welche hart ist und keine oder allenfalls eine sehr geringe Rauheit aufweist. Zur Erzeugung des Drucks auf die Papierbahn weist der Kalanderabschnitt neben den Kalanderwalzen Gegenwalzen auf, wobei jede der Gegenwalzen auf jeweils der der zugehörigen Kalanderwalze gegenüberliegenden Seite der Papierbahn auf die Papierbahn drückt. Im Gegensatz zu den harten Kalanderwalzen sind die Gegenwalzen elastisch, um die Papierbahn flächig gegen die Kalanderwalzen zu drücken. Sowohl die Kalanderwalzen als auch die Gegenwalzen müssen insbesondere eine hohe mechanische Beständigkeit sowie Abriebsfestigkeit bzw. Verschleißfestigkeit aufweisen.

Ebenso hohe Anforderungen werden beispielsweise auch an Leitwalzen gestellt, welche u.a. zur Führung und Umlenkung von Sieben oder Filzen im Nass- und Trockenbereich einer Papiermaschine dienen.

Bei deren Betrieb kommen die meisten dieser Walzen mit den noch ungeglätteten und somit rauen Papierbahnen in Kontakt. Zudem befinden sich auf den Papierbahnen aus dem Herstellungsverfahren resultierenden Anhaftungen, welche die Walzenoberflächen beschädigen können, indem diese in der Walzenoberfläche Einprägungen hinterlassen. Zur Überwindung dieses Problems werden auf die äußere Oberfläche des Walzenbezugs häufig Antihaftbeschichtungen aufgebracht, welche beispielsweise über eine Klebstoffschicht auf der Walzenoberfläche angebracht werden. Alternativ dazu kann die Antihaftbeschichtung, wie in der US 2012/0045587 A1 beschrieben, auch einfach auf den Walzenbezug aufgesprüht werden. Dabei ist die Antihaftbeschichtung üblicherweise aus einem hydrophoben Material zusammengesetzt, und zwar beispielsweise - wie in der US 2012/0045587 A1 beschrieben - aus hydrophobem Imidazol, dem ferner eine hydrophobe Aminverbindung, ein nichtionisches Tensid, ein Fluorpolymer oder dergleichen zugesetzt sein kann.

Derartige Antihaftbeschichtungen sind jedoch insbesondere bei Kalanderwalzen nur bedingt tauglich, weil diese Walzen einem mitunter erheblichen Verschleiß unterliegen und daher die darauf angebrachte Antihaftbeschichtung schnell zerstört wird. Zudem werden solche Walzen von Zeit zu Zeit abgeschliffen, um deren Oberflächenglätte wiederherzustellen, wenn diese nach längerer Betriebszeit aufgeraut worden sind, wodurch die Antihaftbeschichtung ebenfalls zerstört wird.

Aufgabe der vorliegenden Erfindung ist daher die Bereitstellung eines Walzenbezugs, welcher nicht nur eine hohe mechanische Beständigkeit, eine niedrige Rissanfälligkeit, eine exzellente Schlagfestigkeit und eine hohe Abrasions- bzw. Verschleißbeständigkeit aufweist, sondern dessen Oberfläche für Verunreinigungen, welche bei der Papierherstellung auf Papierbahnen vorliegen können, nicht haftend ist und insbesondere auch nach langer Betriebszeit nicht haftend ist. Ferner soll der Walzenbezug eine zur Verwendung derselben als Kalanderwalze und/oder Leitwalze in einer Papier-, Karton- oder Tissuemaschine geeignete Glasübergangstemperatur und ausreichend hohe Bruchzähigkeit aufweisen. Schließlich soll der Walzenbezug einfach und kostengünstig herstellbar sein.

Erfindungsgemäß wird diese Aufgabe gelöst durch einen Walzenbezug, insbesondere für eine Walze zur Behandlung einer Papier-, Karton-, Tissue- oder einer anderen Faserstoffbahn in einer Maschine zur Herstellung und/oder Veredlung derselben und insbesondere für eine Kalanderwalze und/oder eine Leitwalze, welcher wenigstens eine die Außenoberfläche des Walzenbezugs bildende Schicht mit einer Dicke von wenigstens 2 mm umfasst, wobei die wenigstens eine Schicht aus wenigstens einem Polymer gebildet ist oder eine Matrix aus wenigstens einem Polymer enthält, wobei das wenigstens eine Polymer kovalent gebundene teilfluorierte oder perfluorierte Gruppen aufweist, wobei die teilfluorierten oder perfluorierten Gruppen über das Volumen des Walzenbezugs gleichmäßig verteilt sind.

Indem der erfindungsgemäße Walzenbezug bzw. die Matrix des Walzenbezugs aus einem Polymer gebildet ist, welches gleichmäßig bzw. homogen über das Volumen des Walzenbezugs verteilte und kovalent gebundene teilfluorierte oder perfluorierte Gruppen aufweist, zeichnet sich der Walzenbezug durch hydrophobe und oleophobe Eigenschaften und durch eine niedrige Reibung aus, und zwar über dessen gesamte Dicke hinweg. Aus diesem Grund ist nicht nur die äußere Oberfläche des Walzenbezugs für Verunreinigungen, welche bei der Papierherstellung auf Papierbahnen vorliegen können, nicht haftend und insbesondere auch nach langer Betriebszeit nicht haftend, sondern weist der Walzenbezug über seine gesamte Dicke diese nicht haftende Eigenschaft auf. Deswegen weist der erfindungsgemäße Walzenbezug auch nach längerer Betriebszeit, d.h. auch nach einem signifikanten Verschleiß bzw. Abrieb der Außenoberflächenschicht, und sogar nach einem Abschleifen zwecks Wiederherstellung einer glatten Oberfläche nach längerer Betriebszeit eine hervorragende Antihafteigenschaft gegenüber Verunreinigungen, welche bei der Papierherstellung auf Papierbahnen vorliegen, auf. Zudem ist diese Antihafteigenschaft auch stabil, weil die für die hydrophobe und oleophobe Eigenschaft verantwortlichen teilfluorierten oder perfluorierten Gruppen kovalent an das Polymer gebunden sind. Aus diesem Grund wird ein Aufschwimmen bzw. Absetzen von Fluorgruppen enthaltenden Verbindungen in dem Walzenbezug, wie dies beispielsweise auftritt, wenn Partikel aus Fluorpolymer in eine Polymermatrix eingebettet werden, auch nach längerer Betriebszeit zuverlässig verhindert werden.

Aufgrund dessen eignet sich der erfindungsgemäße Walzenbezug insbesondere als Bezug für eine Walze zur Behandlung einer Papier-, Karton-, Tissue- oder einer anderen Faserstoffbahn in einer Maschine zur Herstellung und/oder Veredlung derselben und insbesondere für eine Kalanderwalze einer Papier-, Karton- oder Tissuemaschine und als Leitwalze im Nass- und Trockenbereich einer Papier-, Karton- oder Tissuemaschine

Unter einer gleichmäßigen Verteilung der teilfluorierten oder perfluorierten Gruppen über das Volumen des Walzenbezugs wird im Sinne der vorliegenden Erfindung verstanden, dass jeder Kubikmikrometer des Walzenbezugs einen Fluorgruppengehalt aufweist, welcher 70 bis 130 Gew.-%, bevorzugt 80 bis 120 Gew.-%, besonders bevorzugt 90 bis 110 Gew.-% und ganz besonders bevorzugt 95 bis 105 Gew.-% des Fluorgehalts des gesamten Walzenbezugs aufweist.

Als vorteilhaft hat sich erwiesen, dass das wenigstens eine Polymer der wenigstens einen Schicht, bezogen auf das Gesamtgewicht des Polymers, einen Gehalt an Fluoratomen von 0,1 bis 10 Gew.-%, bevorzugt von 0,5 bis 7,5 Gew.-%, besonders bevorzugt von 1 bis 5 Gew.-% und ganz besonders bevorzugt von 2 bis 4 Gew.-% aufweist.

Grundsätzlich ist die vorliegende Erfindung bezüglich der chemischen Natur der teilfluorierten bzw. perfluorierten Gruppen nicht besonders beschränkt. Gute Ergebnisse werden insbesondere erhalten, wenn das wenigstens eine Polymer eine oder mehrere kovalent gebundene fluorierte Gruppen aufweist, welche aus der Gruppe ausgewählt sind, welche aus teilfluorierten oder perfluorierten Alkylgruppen, teilfluorierten oder perfluorierten Alkenylgruppen, teilfluorierten oder perfluorierten Alkinylgruppen, teilfluorierten oder perfluorierten Cycloalkylgruppen, teilfluorierten oder perfluorierten Arylgruppen, teilfluorierten oder perfluorierten Aralkylgruppen, teilfluorierten oder perfluorierten Polyethergruppen, teilfluorierten oder perfluorierten (Meth)acrylgruppen, teilfluorierten oder perfluorierten Urethan(meth)acrylgruppen, teilfluorierten oder perfluorierten Siloxangruppen, teilfluorierten oder perfluorierten Kautschuken und beliebigen Kombinationen von zwei oder mehr der vorgenannten Gruppen besteht.

Gemäß einer besonders bevorzugten Ausführungsform der vorliegenden Erfindung enthält das wenigstens eine Polymer eine oder mehrere kovalent gebundene Polyethergruppen, und zwar vorzugsweise Polyethergruppe(n) gemäß der folgenden allgemeinen Formel (Ia):

-(R¹O)ₘ-(R²O)ₙ-(R³O)ₒ-(R⁴O)ₚ- (Ia),

worin:
wenigstens einer und bevorzugt wenigstens zwei und besonders bevorzugt alle von R¹, R², R³ und R⁴ unabhängig voneinander ein teilfluorierter oder perfluorierter Alkylrest, ein teilfluorierter oder perfluorierter Alkenylrest, ein teilfluorierter oder perfluorierter Alkinylrest, ein teilfluorierter oder perfluorierter Cycloalkylrest, ein teilfluorierter oder perfluorierter Arylrest oder ein teilfluorierter oder perfluorierter Aralkylrest ist/sind,
jeder von R¹, R², R³ und R⁴, der kein teilfluorierter oder perfluorierter Rest ist, unabhängig voneinander ein Alkylrest, Alkenylrest, Alkinylrest, Cycloalkylrest, Arylrest oder Aralkylrest ist,
m eine ganze Zahl zwischen 2 und 10.000, bevorzugt zwischen 2 und 1.000, besonders bevorzugt zwischen 5 und 100 und ganz besonders bevorzugt zwischen 10 und 50 ist und
jeder von n, o und p eine ganze Zahl zwischen 0 und 10.000, bevorzugt zwischen 0 und 1.000, besonders bevorzugt zwischen 5 und 100 und ganz besonders bevorzugt zwischen 10 und 50 ist. Vorzugsweise ist wenigstens einer und sind bevorzugt wenigstens zwei und besonders bevorzugt alle von R¹, R², R³ und R⁴ unabhängig voneinander ein teilfluorierter oder perfluorierter C₁₋₁₂-Alkylrest, ein teilfluorierter oder perfluorierter C₁₋₁₂-Alkenylrest, ein teilfluorierter oder perfluorierter C₁₋₁₂-Alkinylrest, ein teilfluorierter oder perfluorierter C₄₋₁₂-Cycloalkylrest, ein teilfluorierter oder perfluorierter C₆₋₁₂-Arylrest oder ein teilfluorierter oder perfluorierter C₇₋₂₀-Aralkylrest. In diesem Fall ist zudem bevorzugt jeder von R¹, R², R³ und R⁴, der kein teilfluorierter oder perfluorierter Rest ist, unabhängig voneinander ein C₁₋₁₂-Alkylrest, C₁₋₁₂-Alkenylrest, C₁₋₁₂-Alkinylrest, C₄₋₁₂-Cycloalkylrest, C₆₋₁₂-Arylrest oder C₇₋₂₀-Aralkylrest.

In diesem Zusammenhang gilt es zu beachten, dass im Sinne der vorliegenden Erfindung als Polyethergruppe jede Gruppe bezeichnet wird, welche zwei oder mehr Ethergruppen umfasst. Mithin umfasst der Begriff "Polyethergruppe" im Sinne der vorliegenden Erfindung insbesondere auch Oligoethergruppen.

Gemäß einer bevorzugten Variante der vorstehend genannten Ausführungsform enthält das wenigstens eine Polymer eine oder mehrere kovalent gebundene Polyethergruppen gemäß der folgenden allgemeinen Formel (IIa):

-CF₂O-((CF₂)ₐO)ₘ-((CF₂)_{b}O)ₙ-((CF₂)_{c}O)ₒ-((CF₂)_{d}O)ₚ-CF₂- (IIa),

worin:
a eine ganze Zahl zwischen 1 und 12, bevorzugt zwischen 1 und 6, besonders bevorzugt zwischen 1 und 4 und ganz besonders bevorzugt von 1, 2 oder 3 ist, jeder von b, c und d unabhängig voneinander eine ganze Zahl zwischen 1 und 6 und bevorzugt zwischen 1 und 4 ist, mit der Maßgabe, dass b ungleich a ist, c ungleich b ist und d ungleich c ist,
m eine ganze Zahl zwischen 2 und 10.000, bevorzugt zwischen 2 und 1.000, besonders bevorzugt zwischen 5 und 100 und ganz besonders bevorzugt zwischen 10 und 50 ist und
jeder von n, o und p eine ganze Zahl zwischen 0 und 10.000, bevorzugt zwischen 0 und 1.000, besonders bevorzugt zwischen 5 und 100 und ganz besonders bevorzugt zwischen 10 und 50 ist.

Gemäß einer besonders bevorzugten Variante der vorstehend genannten Ausführungsform enthält das wenigstens eine Polymer eine oder mehrere kovalent gebundene Polyethergruppen gemäß der folgenden allgemeinen Formel (IIIa):

-CF₂O-(CF₂CF₂O)ₘ(CF₂O)ₙ-CF₂- (IIIa),

worin:
m und n unabhängig voneinander eine ganze Zahl zwischen 2 und 10.000, bevorzugt zwischen 2 und 1.000, besonders bevorzugt zwischen 5 und 100 und ganz besonders bevorzugt zwischen 10 und 50 sind.

Anstelle von Polyethergruppen oder zusätzlich zu Polyethergruppen kann das wenigstens eine die Schicht oder die Matrix der Schicht ausbildende Polymer als teilfluorierte oder perfluorierte Gruppe(n) eine oder mehrere kovalent gebundene (Meth)acrylatgruppen gemäß der folgenden allgemeinen Formel (IV) und/oder gemäß der folgenden allgemeinen Formel (V) enthalten: 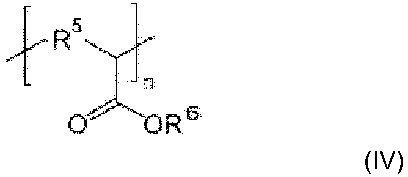 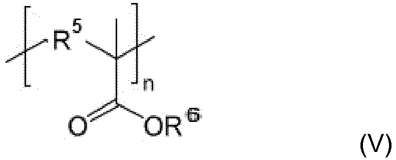 worin:
wenigstens einer und bevorzugt beide von R⁵ und R⁶ unabhängig voneinander ein teilfluorierter oder perfluorierter Alkylrest, ein teilfluorierter oder perfluorierter Alkenylrest, ein teilfluorierter oder perfluorierter Alkinylrest, ein teilfluorierter oder perfluorierter Cycloalkylrest, ein teilfluorierter oder perfluorierter Arylrest oder ein teilfluorierter oder perfluorierter Aralkylrest ist/sind,
falls R⁵ oder R⁶ kein teilfluorierter oder perfluorierter Rest ist, dieser ein Alkylrest, Alkenylrest, Alkinylrest, Cycloalkylrest, Arylrest oder Aralkylrest ist, und
n eine ganze Zahl zwischen 1 und 10.000, bevorzugt zwischen 2 und 1.000, besonders bevorzugt zwischen 5 und 100 und ganz besonders bevorzugt zwischen 10 und 50 ist. Vorzugsweise ist wenigstens einer und sind bevorzugt beide von R⁵ und R⁶ unabhängig voneinander ein teilfluorierter oder perfluorierter C₁₋₁₂-Alkylrest, ein teilfluorierter oder perfluorierter C₁₋₁₂-Alkenylrest, ein teilfluorierter oder perfluorierter C₁₋₁₂-Alkinylrest, ein teilfluorierter oder perfluorierter C₄₋₁₂-Cycloalkylrest, ein teilfluorierter oder perfluorierter C₆₋₁₂-Arylrest oder ein teilfluorierter oder perfluorierter C₇₋₂₀-Aralkylrest. Falls einer von R⁵ oder R⁶ kein teilfluorierter oder perfluorierter Rest ist, ist dieser bevorzugt ein C₁₋₁₂-Alkylrest, C₁₋₁₂-Alkenylrest, C₁₋₁₂-Alkinylrest, C₄₋₁₂-Cycloalkylrest, C₆₋₁₂-Arylrest oder C₇₋₂₀-Aralkylrest.

Anstelle von Polyethergruppen und (Meth)acrylatgruppen oder zusätzlich zu Polyethergruppen und/oder (Meth)acrylatgruppen kann das wenigstens eine die Schicht oder die Matrix der Schicht ausbildende Polymer als teilfluorierte oder perfluorierte Gruppe(n) eine oder mehrere kovalent gebundene Urethan(meth)acrylgruppen gemäß der folgenden allgemeinen Formel (VI) und/oder gemäß der folgenden allgemeinen Formel (VII) enthalten: 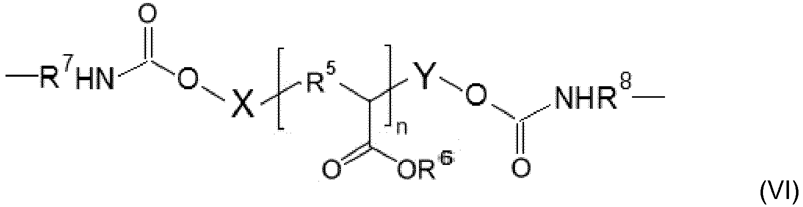 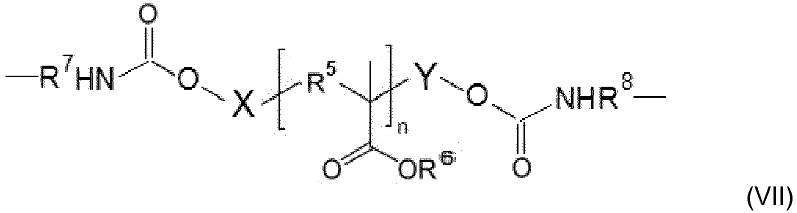 worin:
wenigstens einer und bevorzugt beide von R⁵ und R⁶ unabhängig voneinander ein teilfluorierter oder perfluorierter Alkylrest, ein teilfluorierter oder perfluorierter Alkenylrest, ein teilfluorierter oder perfluorierter Alkinylrest, ein teilfluorierter oder perfluorierter Cycloalkylrest, ein teilfluorierter oder perfluorierter Arylrest oder ein teilfluorierter oder perfluorierter Aralkylrest ist/sind,
falls R⁵ oder R⁶ kein teilfluorierter oder perfluorierter Rest ist, dieser ein Alkylrest, Alkenylrest, Alkinylrest, Cycloalkylrest, Arylrest oder Aralkylrest ist,
R⁷ und R⁸ unabhängig voneinander ein Alkylrest, Alkenylrest, Alkinylrest, Cycloalkylrest, Arylrest oder Aralkylrest sind und
n eine ganze Zahl zwischen 1 und 10.000, bevorzugt zwischen 2 und 1.000, besonders bevorzugt zwischen 5 und 100 und ganz besonders bevorzugt zwischen 10 und 50 ist. Auch bei dieser Variante ist vorzugsweise wenigstens einer und sind bevorzugt beide von R⁵ und R⁶ unabhängig voneinander ein teilfluorierter oder perfluorierter C₁₋₁₂-Alkylrest, ein teilfluorierter oder perfluorierter C₁₋₁₂-Alkenylrest, ein teilfluorierter oder perfluorierter C₁₋₁₂-Alkinylrest, ein teilfluorierter oder perfluorierter C₄₋₁₂-Cycloalkylrest, ein teilfluorierter oder perfluorierter C₆₋₁₂-Arylrest oder ein teilfluorierter oder perfluorierter C₇₋₂₀-Aralkylrest. Auch bei dieser Ausführungsform ist, falls einer von R⁵ oder R⁶ kein teilfluorierter oder perfluorierter Rest ist, dieser bevorzugt ein C₁₋₁₂-Alkylrest, C₁₋₁₂-Alkenylrest, C₁₋₁₂-Alkinylrest, C₄₋₁₂-Cycloalkylrest, C₆₋₁₂-Arylrest oder C₇₋₂₀-Aralkylrest.

Anstelle von Polyethergruppen, (Meth)acrylatgruppen und Urethan(meth)acrylgruppen oder zusätzlich zu einer oder mehreren von Polyethergruppen, (Meth)acrylatgruppen und Urethan(meth)acrylgruppen kann das wenigstens eine die Schicht oder die Matrix der Schicht ausbildende Polymer als teilfluorierte oder perfluorierte Gruppe(n) auch eine oder mehrere kovalent gebundene teilfluorierte oder perfluorierte C₁₋₁₂-Alkylgruppen, teilfluorierte oder perfluorierte C₁₋₁₂-Alkenylgruppen, teilfluorierte oder perfluorierte C₁₋₁₂-Alkinylgruppen, teilfluorierte oder perfluorierte C₄₋₁₂-Cycloalkylgruppen, teilfluorierte oder perfluorierte C₆₋₁₂-Arylgruppen oder teilfluorierte oder perfluorierte C₇₋₁₂-Aralkylgruppen enthalten.

Gemäß einer weiteren Ausführungsform der vorliegenden Erfindung enthält das wenigstens eine Polymer - anstelle von oder zusätzlich zu einer oder mehreren der vorgenannten fluorierten Gruppen, d.h. Polyethergruppen, (Meth)acrylatgruppen, Urethan(meth)acrylgruppen, teilfluorierten oder perfluorierten Alkenyl-, Alkinyl-, Cycloalkyl-, Aryl- und Aralkylgruppen - eine oder mehrere kovalent gebundene Siloxangruppen gemäß der folgenden allgemeinen Formel (VIII):

-(R¹R²SiO)ₙ- (VIII),

worin:
wenigstens einer und bevorzugt beide von R¹ und R² unabhängig voneinander ein teilfluorierter oder perfluorierter C₁₋₁₂-Alkylrest, ein teilfluorierter oder perfluorierter C₁₋₁₂-Alkenylrest, ein teilfluorierter oder perfluorierter C₁₋₁₂-Alkinylrest, ein teilfluorierter oder perfluorierter C₄₋₁₂-Cycloalkylrest, ein teilfluorierter oder perfluorierter C₆₋₁₂-Arylrest oder ein teilfluorierter oder perfluorierter C₇₋₁₂-Aralkylrest sind falls R¹ oder R² kein teilfluorierter oder perfluorierter Rest ist, dieser ein C₁₋₁₂-Alkylrest, C₁₋₁₂-Alkenylrest, C₁₋₁₂-Alkinylrest, C₄₋₁₂-Cycloalkylrest, C₆₋₁₂-Arylrest oder C₇₋₁₂-Aralkylrest ist, und
n eine ganze Zahl zwischen 1 und 10.000, bevorzugt zwischen 2 und 1.000, besonders bevorzugt zwischen 5 und 100 und ganz besonders bevorzugt zwischen 10 und 50 ist.

Zusätzlich oder alternativ zu den vorstehend genannten fluorierten Gruppen ist es gemäß einer weiteren Ausführungsform der vorliegenden Erfindung vorgesehen, dass das wenigstens eine Polymer eine oder mehrere kovalent gebundene vinylidenfluoridgruppenhaltige Kautschukgruppen enthält.

Unabhängig von der chemischen Natur der fluorierten Gruppe(n) kann das Polymer, aus dem die wenigstens eine Schicht oder die Matrix der wenigstens einen Schicht gebildet ist, jedes in herkömmlichen Walzenbezügen eingesetzte sein, wie insbesondere ein Polymer ausgewählt aus der Gruppe bestehend aus Epoxidharzen, Polyurethanen, Kautschuken, Silikonen und beliebigen Kombinationen aus zwei oder mehr der vorstehenden Polymere.

Ein wesentlicher Gesichtspunkt ist die Glasübergangstemperatur des die wenigstens eine Schicht oder die Matrix der wenigstens einen Schicht des Walzenbezugs ausbildenden Polymers, welche in einem Bereich liegen muss, dass der Walzenbezug bei den geforderten Einsatztemperaturen verwendbar ist. Durch das Einbringen von Fluorsubstituenten in Polymere wird häufig die Glasübergangstemperatur des Polymers drastisch verändert, und zwar in einen Bereich, der für eine Walze zur Behandlung einer Papier-, Karton-, Tissue- oder einer anderen Faserstoffbahn in einer Maschine zur Herstellung und/oder Veredlung derselben und insbesondere für eine Kalanderwalze und für eine Leitwalze ungeeignet ist. Um eine solche ungewünschte Veränderung der Glasübergangstemperatur des Polymers zu vermeiden oder zumindest zu minimieren, wird es in Weiterbildung des Erfindungsgedankens vorgeschlagen, dass die wenigstens eine Schicht eine aus dem wenigstens einen Polymer gebildete Matrix umfasst und in die Matrix Partikel aus einem teilfluorierte oder perfluorierte Gruppen aufweisendem Polymer eingebettet sind, wobei wenigstens ein Teil der Partikel direkt oder über eine Abstandsgruppe kovalent mit dem Matrixpolymer verbunden ist. Überraschenderweise wurde im Rahmen der vorliegenden Erfindung herausgefunden, dass durch eine solche Zweiphasenstruktur die Glasübergangstemperatur des Polymers, beispielsweise Epoxidharzes, nicht oder allenfalls unwesentlich beeinflusst bzw. erhöht wird. Abgesehen davon weist eine Polymerzusammensetzung mit einer solchen Zweiphasenstruktur überraschenderweise auch eine erhöhte Bruchzähigkeit auf. Zudem weist eine Polymerzusammensetzung mit einer solchen Zweiphasenstruktur aufgrund der Einbettung des die teilfluorierten oder perfluorierten Gruppen aufweisenden Polymers auch eine hervorragende Antihafteigenschaft gegenüber Verunreinigungen, welche bei der Papierherstellung auf Papierbahnen vorliegen, auf, und zwar insbesondere auch nach längerer Betriebszeit, d.h. auch nach einem signifikanten Verschleiß bzw. Abrieb der Oberflächenschicht. Aufgrund dessen eignet sich insbesondere der Walzenbezug gemäß dieser ganz besonders bevorzugten Ausführungsform der vorliegenden Erfindung hervorragend als Bezug für eine Walze zur Behandlung einer Papier-, Karton-, Tissue- oder einer anderen Faserstoffbahn in einer Maschine zur Herstellung und/oder Veredlung derselben und insbesondere für eine Kalanderwalze einer Papier-, Karton- oder Tissuemaschine und als Leitwalze im Nass- und Trockenbereich einer Papier-, Karton- oder Tissuemaschine.

Gute Ergebnisse werden bei dieser ganz besonders bevorzugten Ausführungsform der vorliegenden Erfindung insbesondere erhalten, wenn die Partikel aus einem teilfluorierte oder perfluorierte Polyethergruppen enthaltenden Polymer zusammengesetzt sind. In dem Fall der Einbettung und kovalenten Bindung soleher Partikel an beispielsweise eine Matrix aus Epoxidharz wird die Glasübergangstemperatur des die Matrix ausbildenden Polymers nicht oder allenfalls um wenige Grad Celsius beeinflusst bzw. erhöht.

Gemäß einer bevorzugten Variante dieser besonders bevorzugten Ausführungsform der vorliegenden Erfindung sind die Partikel aus wenigstens einem Polymer zusammengesetzt, welches wenigstens eine Gruppe gemäß der folgenden allgemeinen Formel (la) enthält:

-(R¹O)ₘ-(R²O)ₙ-(R³O)ₒ-(R⁴O)ₚ- (Ia),

worin:
wenigstens einer und bevorzugt wenigstens zwei und besonders bevorzugt alle von R¹, R², R³ und R⁴ unabhängig voneinander ein teilfluorierter oder perfluorierter Alkylrest, ein teilfluorierter oder perfluorierter Alkenylrest, ein teilfluorierter oder perfluorierter Alkinylrest, ein teilfluorierter oder perfluorierter Cycloalkylrest, ein teilfluorierter oder perfluorierter Arylrest oder ein teilfluorierter oder perfluorierter Aralkylrest ist/sind,
jeder von R¹, R², R³ und R⁴, der kein teilfluorierter oder perfluorierter Rest ist, unabhängig voneinander ein Alkylrest, Alkenylrest, Alkinylrest, Cycloalkylrest, Arylrest oder Aralkylrest ist,
m eine ganze Zahl zwischen 2 und 10.000, besonders bevorzugt zwischen 5 und 100 und ganz besonders bevorzugt zwischen 10 und 50 ist und
jeder von n, o und p eine ganze Zahl zwischen 0 und 10.000, bevorzugt zwischen 0 und 1.000, besonders bevorzugt zwischen 5 und 100 und ganz besonders bevorzugt zwischen 10 und 50 ist. Vorzugsweise ist wenigstens einer und sind bevorzugt wenigstens zwei und besonders bevorzugt alle von R¹, R², R³ und R⁴ unabhängig voneinander ein teilfluorierter oder perfluorierter C₁₋₁₂-Alkylrest, ein teilfluorierter oder perfluorierter C₁₋₁₂-Alkenylrest, ein teilfluorierter oder perfluorierter C₁₋₁₂-Alkinylrest, ein teilfluorierter oder perfluorierter C₄₋₁₂-Cycloalkylrest, ein teilfluorierter oder perfluorierter C₆₋₁₂-Arylrest oder ein teilfluorierter oder perfluorierter C₇₋₂₀-Aralkylrest. In diesem Fall ist zudem bevorzugt jeder von R¹, R², R³ und R⁴, der kein teilfluorierter oder perfluorierter Rest ist, unabhängig voneinander ein C₁₋₁₂-Alkylrest, C₁₋₁₂-Alkenylrest, C₁₋₁₂-Alkinylrest, C₄₋₁₂-Cycloalkylrest, C₆₋₁₂-Arylrest oder C₇₋₂₀-Aralkylrest.

Gemäß einer noch bevorzugteren Variante dieser besonders bevorzugten Ausführungsform der vorliegenden Erfindung sind die Partikel aus wenigstens einem Polymer zusammengesetzt, welches wenigstens eine Gruppe gemäß der folgenden allgemeinen Formel (la) enthält:

-(R¹O)ₘ-(R²O)ₙ-(R³O)o-(R⁴O)ₚ- (Ia),

worin:
jeder von R¹, R², R³ und R⁴ unabhängig voneinander ein teilfluorierter oder perfluorierter C₁₋₁₂-Alkylrest, ein teilfluorierter oder perfluorierter C₁₋₁₂-Alkenylrest, ein teilfluorierter oder perfluorierter C₁₋₁₂-Alkinylrest, ein teilfluorierter oder perfluorierter C₄₋₁₂-Cycloalkylrest, ein teilfluorierter oder perfluorierter C₆₋₁₂-Arylrest oder ein teilfluorierter oder perfluorierter C₇₋₂₀-Aralkylrest ist,
m eine ganze Zahl zwischen 2 und 10.000, bevorzugt zwischen 25 und 1.000, besonders bevorzugt zwischen 5 und 100 und ganz besonders bevorzugt zwischen 10 und 50 ist und
jeder von n, o und p eine ganze Zahl zwischen 0 und 10.000, bevorzugt zwischen 0 und 1.000, besonders bevorzugt zwischen 5 und 100 und ganz besonders bevorzugt zwischen 10 und 50 ist.

Besonders gute Ergebnisse werden bei dieser besonders bevorzugten Ausführungsform der vorliegenden Erfindung erhalten, wenn die Partikel aus einem Polymer zusammengesetzt sind, welches Gruppen gemäß der folgenden allgemeinen Formel (I) enthält:

-(R¹O)ₘ-(R²O)ₙ-(R³O)o-(R⁴O)ₚ- (Ia),

worin:
jeder von R¹, R², R³ und R⁴ unabhängig voneinander ein teilfluorierter oder perfluorierter C₁₋₆-Alkylrest ist,
m eine ganze Zahl zwischen 2 und 10.000, bevorzugt zwischen 25 und 1.000, besonders bevorzugt zwischen 5 und 100 und ganz besonders bevorzugt zwischen 10 und 50 ist und
jeder von n, o und p eine ganze Zahl zwischen 0 und 10.000, bevorzugt zwischen 0 und 1.000, besonders bevorzugt zwischen 5 und 100 und ganz besonders bevorzugt zwischen 10 und 50 ist.

In Weiterbildung des Erfindungsgedankens wird es vorgeschlagen, dass in der folgenden allgemeinen Formel (la):
m eine ganze Zahl zwischen 5 und 100 und bevorzugt zwischen 10 und 50 ist,
n 0 oder eine ganze Zahl zwischen 5 und 100 und bevorzugt zwischen 10 und 50 ist und
o und p jeweils 0 sind.

Gemäß einer besonders bevorzugten Variante der in Rede stehenden besonders bevorzugten Ausführungsform der vorliegenden Erfindung sind die Partikel aus einem Polymer zusammengesetzt, welches wenigstens eine Gruppe gemäß der folgenden allgemeinen Formel (IIa) enthält:

-CF₂O-((CF₂)ₐO)ₘ-((CF₂)_{b}O)ₙ-((CF₂)_{c}O)ₒ-((CF₂)_{d}O)ₚ-CF₂- (IIa),

worin:
a eine ganze Zahl zwischen 1 und 12, bevorzugt zwischen 1 und 6, besonders bevorzugt zwischen 1 und 4 und ganz besonders bevorzugt von 1, 2 oder 3 ist, jeder von b, c und d unabhängig voneinander eine ganze Zahl zwischen 1 und 6 und bevorzugt zwischen 1 und 4 ist, mit der Maßgabe, dass b ungleich a ist, c ungleich b ist und d ungleich c ist,
m eine ganze Zahl zwischen 2 und 10.000, bevorzugt zwischen 2 und 1.000, besonders bevorzugt zwischen 5 und 100 und ganz besonders bevorzugt zwischen 10 und 50 ist und
jeder von n, o und p eine ganze Zahl zwischen 0 und 10.000, bevorzugt zwischen 0 und 1.000, besonders bevorzugt zwischen 5 und 100 und ganz besonders bevorzugt zwischen 10 und 50 ist.

Noch weiter bevorzugt ist, dass die Partikel aus einem Polymer zusammengesetzt sind, welches wenigstens eine Gruppe gemäß der folgenden allgemeinen Formel (IIIa) enthält:

-CF₂O-(CF₂CF₂O)ₘ(CF₂O)ₙ-CF₂- (IIIa),

worin:
m und n unabhängig voneinander eine ganze Zahl zwischen 2 und 10.000, bevorzugt zwischen 2 und 1.000, besonders bevorzugt zwischen 5 und 100 und ganz besonders bevorzugt zwischen 10 und 50 sind.

Grundsätzlich können die Partikel aus einem aus den fluorierten Gruppen, also bevorzugt den teilfluorierten oder perfluorierten Polyethergruppen, bestehenden Polymer gebildet sein. Allerdings ist es bevorzugt, wenn die Partikel neben den fluorierten Gruppen noch weitere Gruppen enthalten, welche die chemisch Kompatibilität der Partikel mit dem Matrixmaterial erhöhen. Insbesondere in dem Fall, dass das Matrixpolymer ein Epoxidharz ist, ist es bevorzugt, dass die vorstehend beschriebenen Polyethergruppen gemäß der folgenden allgemeinen Formeln (la), (IIa) und (IIIa) an ihren beiden terminalen Enden jeweils direkt oder über eine Verbindungsgruppe mit mindestens einer Hydroxyethergruppe verbunden sind.

Vorzugsweise ist die Hydroxyethergruppe eine Gruppe gemäß der allgemeinen Formel (IX):

-(CH₂-C(OH)-CH₂-O-R-O)ₙ (IX)

worin
R ein Alkylrest, Alkenylrest, Alkinylrest, Cycloalkylrest, Arylrest oder Aralkylrest und bevorzugt ein C₁₋₁₂-Alkylrest, C₁₋₁₂-Alkenylrest, C₁₋₁₂-Alkinylrest, C₄₋₁₂-Cycloalkylrest, C₆₋₁₂-Arylrest oder C₇₋₂₀-Aralkylrest ist sowie
n eine ganze Zahl zwischen 1 und 100, bevorzugt zwischen 1 und 50, besonders bevorzugt zwischen 1 und 10 und ganz besonders bevorzugt zwischen 1 und 5 ist.

Besonders gute Ergebnisse werden erhalten, wenn die Hydroxyethergruppe eine Gruppe gemäß der folgenden Formel ist: 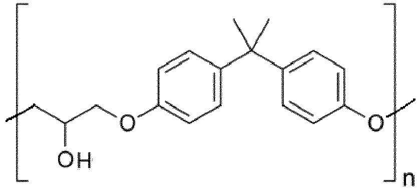 worin n eine ganze Zahl zwischen 1 und 100, bevorzugt zwischen 1 und 50, besonders bevorzugt zwischen 1 und 10 und ganz besonders bevorzugt zwischen 1 und 5 ist.

Grundsätzlich kann die Hydroxyethergruppe direkt mit einer der Polyethergruppen gemäß der allgemeinen Formeln (Ia), (IIa) und (IIIa) kovalent verbunden sein.

Alternativ dazu ist es auch möglich und aus synthesetechnischen Gründen auch bevorzugt, die Polyethergruppe gemäß einer der allgemeinen Formeln (Ia), (IIa) und (IIIa) an ihren beiden terminalen Enden jeweils über eine Verbindungsgruppe mit der mindestens einen Hydroxyethergruppe zu verbinden. Dabei ist die Verbindungsgruppe vorzugsweise eine an ihren beiden Termini durch jeweils eine Estergruppe terminierte Alkyl-, Alkenyl-, Alkyinyl-, Aryl- oder Aralkylgruppe und bevorzugt eine Phthalsäurediestergruppe.

In Weiterbildung des Erfindungsgedankens wird es vorgeschlagen, dass die Partikel aus einem Polymer zusammengesetzt sind, welches durch ein Verfahren erhältlich ist, welches die nachfolgenden Schritte umfasst:
a) Reagieren einer Verbindung gemäß der allgemeinen Formel (Ib)

   R⁵-(R¹O)ₘ-(R²O)ₙ-(R³O)ₒ-(R⁴O)ₚ-R⁶ (Ib),

   worin
   R⁵ und R⁶ unabhängig voneinander aus der Gruppe bestehend Amingruppe, Amidgruppen, Amidosilangruppen, Hydroxygruppe, Hydroxyalkylgruppen, alkoxylierten Hydroxyalkylgruppen, Urethan(meth)acrylat-gruppen und Phosphatgruppen ausgewählt sind und
   R¹, R², R³, R⁴, m, n, o und p wie vorstehend in Bezug auf die Formel (Ia) definiert sind,
   mit einer Dicarbonsäure, mit einem Carbonsäureanhydrid, mit einem Diamin oder mit einem Diol sowie
b) Reagieren des in dem Schritt a) erhaltenen Produkts mit einer glycidylgruppenterminierten Verbindung.

Vorzugsweise wird in dem Verfahrensschritt a) eine Verbindung gemäß der allgemeinen Formel (IIb):

R⁵-CF₂O-((CF₂)ₐO)ₘ-((CF₂)_{b}O)ₙ-((CF₂)_{c}O)ₒ-((CF₂)_{d}O)p-CF₂-R⁶ (IIb),

worin:
R⁵ und R⁶ unabhängig voneinander aus der Gruppe bestehend Amingruppe, Amidgruppen, Amidosilangruppen, Hydroxygruppe, Hydroxyalkylgruppen, alkoxylierten Hydroxyalkylgruppen, Urethan(meth)acrylat-gruppen und Phosphatgruppen ausgewählt sind und
m, n, o und p wie vorstehend in Bezug auf die Formel (IIa) definiert sind,
mit einem Carbonsäureanhydrid reagiert und in dem Schritt b) als glycidylgruppenterminierte Verbindung eine Verbindung gemäß der allgemeinen Formel (X) eingesetzt:

   -G-O-R- (X)

   worin:
   G eine Glycidylgruppe: 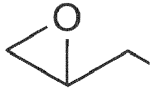 ist und
   R ein Alkylrest, Alkenylrest, Alkinylrest, Cycloalkylrest, Arylrest oder Aralkylrest ist.

Besonders gute Ergebnisse werden bei dieser Ausführungsform erhalten, wenn in dem Schritt a) eine Verbindung gemäß der allgemeinen Formel (IIIb):

R⁵-CF₂O-(CF₂CF₂O)ₘ(CF₂O)ₙ-CF₂-R⁶ (IIIb),

worin m und n wie vorstehend in Bezug auf die Formel (IIIa) definiert sind und R⁵ und R⁶ jeweils eine Hydroxygruppe, eine Hydroxyalkylgruppe, eine Hydroxyalkoxygruppe oder eine Hydroxypolyalkoxygruppe, bevorzugt eine Hydroxymethylgruppe oder eine CH₂(CH₂CH₂O)ₙ-OH-Gruppe sind,
mit Phthalsäureanhydrid oder mit einem Phthalsäureanhydridderivat, wie Methyltetrahydrophthalsäureanhydrid, reagiert wird und in dem Schritt b) als glycidylgruppenterminierte Verbindung ein Bisphenol-A-diglycidyletherharz gemäß der allgemeinen Formel (XI) eingesetzt wird: 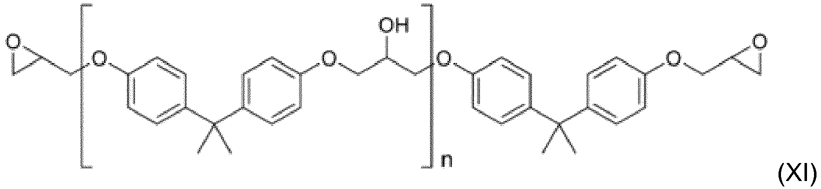
worin n eine ganze Zahl zwischen 1 und 100, bevorzugt zwischen 2 und 50 und besonders bevorzugt zwischen 3 und 10 ist.

Gemäß einer weiteren bevorzugten Ausführungsform der vorliegenden Erfindung sind die Partikel mit dem die Matrix ausbildenden Polymer über eine Abstandsgruppe verbunden, welche an ihren beiden Enden durch jeweils eine Amingruppe terminiert ist.

Ein Beispiel für eine solche Abstandsgruppe ist eine Gruppe gemäß der folgenden allgemeinen Formel (XII):

-R⁷R⁸N-A-NR⁷R⁸- (XII),

worin:
A ein Alkylrest, substituierter Alkylrest, Alkenylrest, substituierter Alkenylrest, Alkinylrest, substituierter Alkinylrest, Cycloalkylrest, substituierter Cycloalkylrest, Arylrest, substituierter Arylrest, Aralkylrest oder substituierter Aralkylrest ist und R⁷ und R⁸ jeweils ein Hauptkettenbestandteil des die Matrix ausbildenden Epoxidharzes ist.

Insbesondere haben sich als Abstandsgruppe i) ein unsubstituierter oder substituierter aromatischer Diaminrest, bevorzugt ein unsubstituierter oder substituierter Diaminbenzolrest und besonders bevorzugt ein Diethylmethylbenzoldiaminrest, oder ii) ein unsubstituierter oder substituierter Dicarbonsäurerest und bevorzugt ein unsubstituierter oder substituierter Phthalsäurerest als geeignet erwiesen.

Grundsätzlich sind die in der Matrix eingebetteten Partikel bezüglich ihrer Größe nicht besonders beschränkt. Um eine möglichst homogene Verteilung der Partikel in der Matrix zu erlauben, ist es jedoch bevorzugt, dass die Partikel einen mittleren Partikeldurchmesser (d₅₀) zwischen 1 nm und maximal 20 µm und besonders bevorzugt einen mittleren Partikeldurchmesser (d₅₀) zwischen 1 nm und maximal 10 µm aufweisen. Unter dem mittleren Partikeldurchmesser (d₅₀) werden dabei im Einklang mit der fachüblichen Definition dieses Begriffs Partikel verstanden, von denen 50 % einen kleineren Durchmesser als diesen Wert aufweisen.

Die Menge der in die Matrix eingebetteten Partikel kann in Abhängigkeit von den Erfordernissen in einem breiten Bereich gewählt werden. Vorzugsweise enthält die wenigstens eine Schicht des Walzenbezugs, bezogen auf das Volumen der wenigstens einen Schicht, 1 bis 50 Vol.-%, bevorzugt 2 bis 20 Vol.-% und besonders bevorzugt 5 bis 20 Vol.-% der Partikel.

Erfindungsgemäß weist das wenigstens eine die wenigstens eine Schicht bzw. die Matrix der wenigstens einen Schicht ausbildende Polymer kovalent gebundene teilfluorierte oder perfluorierte Gruppen auf, wobei dies gemäß der vorstehend beschriebenen, besonders bevorzugten Ausführungsform der vorliegenden Erfindung vorzugsweise dadurch erreicht wird, dass die wenigstens eine Schicht eine aus dem wenigstens einen Polymer gebildete Matrix umfasst und in die Matrix Partikel aus einem teilfluorierte oder perfluorierte Gruppen aufweisenden Polymer eingebettet sind, wobei wenigstens ein Teil der Partikel direkt oder über eine Abstandsgruppe kovalent mit dem Matrixpolymer verbunden ist. Grundsätzlich gilt, dass die erfindungsgemäßen Vorteile und insbesondere die Vermeidung eines Aufschwimmens bzw. Absinkens der Partikel in dem Walzenbezug in besonders hohem Ausmaß erreicht werden, wenn möglichst viel der Partikel kovalent an das Matrixpolymer gebunden sind. Daher ist es bevorzugt, dass wenigstens 10%, weiter bevorzugt wenigstens 25%, insbesondere bevorzugt wenigstens 50%, besonders bevorzugt wenigstens 75%, ganz besonders bevorzugt wenigstens 90% und höchst bevorzugt alle Partikel kovalent mit der Matrix verbunden sind.

Grundsätzlich kann die Matrix aus allen möglichen Polymeren zusammengesetzt sein, welche die für einen Walzenbezug erforderlichen mechanischen und sonstigen Eigenschaften aufweisen, und zwar insbesondere aus solchen, welche für die aus dem Stand der Technik bekannten Walzen eingesetzt werden. Insbesondere ist es bevorzugt, dass die Matrix aus wenigstens einem nicht-fluorierten Polymer zusammengesetzt ist.

Als geeignete nicht-fluorierte Polymere für die Matrix seien beispielhaft Epoxidharze, Polyurethane, Kautschuke, Silikone und beliebigen Kombinationen aus zwei oder mehr der vorstehenden Polymere genannt.

Insbesondere, wenn der Walzenbezug für eine Kalanderwalze und/oder als Leitwalze zur Behandlung einer Papier-, Karton-, Tissue- oder einer anderen Faserstoffbahn in einer Maschine zur Herstellung und/oder Veredlung derselben eingesetzt werden soll, hat es sich als vorteilhaft erwiesen, dass das wenigstens eine nicht-fluorierte Polymer, aus dem die Matrix gebildet wird, ein Epoxidharz ist, und zwar besonders bevorzugt ein Epoxidharz, welches die nachfolgende Struktureinheit enthält: 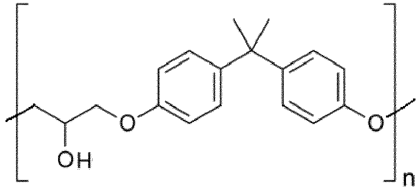 worin n eine ganze Zahl zwischen 1 und 1.000, bevorzugt zwischen 1 und 100 und besonders bevorzugt zwischen 5 und 20 ist.

Um u.a. die erforderliche Härte, die notwendige Festigkeit und das erforderliche Elastizitätsmodul einzustellen, wird es in Weiterbildung des Erfindungsgedankens vorgeschlagen, dass das wenigstens eine nicht-fluorierte Polymer ein vernetztes Epoxidharz ist. Dabei kann das Epoxidharz durch jeden für Epoxidharze bekannten Härter vernetzt sein. Bevorzugte Beispiele für solche Härter sind insbesondere Diamine, Dicarbonsäuren und Dicarbonsäureanhydride, wobei bevorzugte Beispiele hierfür aromatische Diamine, aliphatische Diamine, cycloaliphatische Diamine, Polyamidoamine, Phthalsäure, Phthalsäureanhydrid, Phthalsäurederivate und Phthalsäureanhydridderivate sind.

Spezifische Beispiele für geeignete Härter sind Diethylmethylbenzoldiamin, Methyl-5-norbornen-2,3-dicarbonsäureanhydrid, Hexahydrophthalsäureanhydrid, Trimellitsäureanhydrid, Phthalsäureanhydrid, Methylhexahydrophthalsäureanhydrid und Tetrahydrophthalsäureanhydrid.

In Weiterbildung des Erfindungsgedankens wird es vorgeschlagen, dass der Walzenbezug durch ein Verfahren erhältlich ist, bei dem die Partikel, welche nach einem vorstehend beschriebenen Verfahren hergestellt worden sind - also nach einem Verfahren, bei dem eine Verbindung gemäß einer der allgemeinen Formeln (Ib), (IIb) und (IIIb) mit einer Dicarbonsäure, mit einem Carbonsäureanhydrid, mit einem Diamin oder mit einem Diol reagiert wird sowie das so erhaltene Produkts mit einer glycidylgruppenterminierten Verbindung reagiert wird - mit einem Bisphenol-A-diglycidyletherharz gemäß der allgemeinen Formel (XI) in Gegenwart eines Härters reagiert werden: 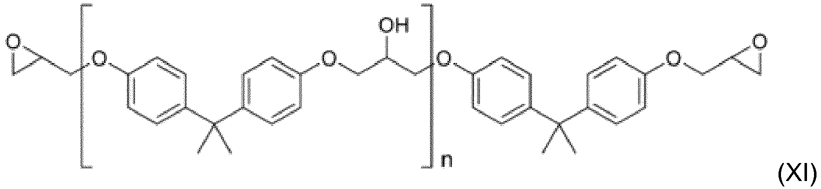 worin n eine ganze Zahl zwischen 1 und 100, bevorzugt zwischen 2 und 50 und besonders bevorzugt zwischen 3 und 10 ist.

Bei dem Härter handelt es sich wiederum vorzugsweise um ein Diamin oder eine Dicarbonsäure und bevorzugt um ein aromatisches Diamin, ein aliphatisches Diamin, ein cycloaliphatisches Diamin, ein Polyamidoamin oder ein Phthalsäurederivat, wie insbesondere ein Phthalsäureanhydrid.

Spezifische Beispiele für Härter, welche bei dieser Ausführungsform eingesetzt werden können, sind Diethylmethylbenzoldiamin, Methyl-5-norbornen-2,3-dicarbonsäureanhydrid, Hexahydrophthalsäureanhydrid, Trimellitsäureanhydrid, Phthalsäureanhydrid, Methylhexahydrophthalsäureanhydrid und Tetrahydrophthalsäureanhydrid. Selbstverständlich kann auch eine Mischung aus zwei oder mehr der vorgenannten Härter eingesetzt werden.

Alternativ zu dem zuvor beschriebenen Epoxidharz oder zusätzlich zu dem zuvor beschriebenen Epoxidharz kann die Matrix der wenigstens einen Schicht des Walzenbezugs auch aus einem vernetzten Kautschuk bzw. Gummi gebildet sein, und zwar vorzugsweise aus einem, welcher aus der Gruppe bestehend aus vernetzten Naturkautschuken, vernetzten Styrol-Butadien-Kautschuken, vernetzten Chloroprenkautschuken, vernetzten Nitrilkautschuken, vernetzten hydrierten Nitrilkautschuken, vernetzten carboxylierten Nitrilkautschuken und beliebigen Mischungen und/oder Copolymeren aus zwei oder mehr der vorgenannten vernetzten Kautschuke ausgewählt ist.

Unabhängig davon, ob die wenigstens eine Schicht des Walzenbezugs aus einem einphasig vorliegenden Polymer, welches kovalent gebundene teilfluorierte oder perfluorierte Gruppen aufweist, gebildet ist oder aus einer Zweiphasenpolymerzusammensetzung, welche eine aus dem wenigstens einen Polymer gebildete Matrix umfasst, in welche Partikel aus einem teilfluorierte oder perfluorierte Gruppen aufweisendem Polymer eingebettet sind, wobei wenigstens ein Teil der Partikel direkt oder über eine Abstandsgruppe kovalent mit dem Matrixpolymer verbunden ist, können in das Polymer bzw. in die aus dem Polymer gebildete Matrix Füllstoffpartikel und/oder Fasern eingebettet sein.

Als Füllstoff können ein oder mehrere anorganische Füllstoffe eingebettet sein. Dabei kann der anorganische Füllstoffe beispielsweise ein Metalloxid, Halbmetalloxid, Metallcarbid, Halbmetallcarbid, Metallnitrid, Halbmetallnitrid, Metallcarbonitrid, Halbmetallcarbonitrid, ein Metallsilicat oder eine beliebige Mischungen aus zwei oder mehr der vorgenannten Verbindungen sein, wie insbesondere ein Füllstoff ausgewählt aus der Gruppe bestehend aus Aluminiumoxid, Titandioxid, Zirkoniumdioxid, Yttriumoxid, Siliciumdioxid, Chromoxid, Chromcarbid, Titancarbid, Borcarbid, Wolframcarbid, Aluminiumcarbid, Bornitrid, Aluminiumnitrid, Chromnitrid, Niobnitrid, Chromcarbonitrid, Titancarbonitrid, Borcarbonitrid, Wolframcarbonitrid, Diamant, Aluminiumsilikaten, Aluminiumnatriumsilikaten, Calciumsilikaten, Calciumnatriumsilikaten und beliebigen Mischungen aus zwei oder mehr der vorgenannten Verbindungen. Vorzugsweise weist der anorganische Füllstoff einen mittleren Partikeldurchmesser (d₅₀) von maximal 50 µm, besonders bevorzugt von 1 nm bis 20 µm und ganz besonders bevorzugt von 1 nm bis 10 µm auf. Dabei ist der anorganische Füllstoff in der wenigstens einen Schicht vorzugsweise in einer auf das Volumen der wenigstens einen bezogenen Menge von 0,1 bis 5 Vol.-%, weiter bevorzugt von 1 bis 5 Vol.-%, besonders bevorzugt von 2 bis 5 Vol.-% und ganz besonders bevorzugt von 3 bis 5 Vol.-% enthalten.

Als Füllstoff können auch Partikel aus einem nicht-fluorierten Polymer eingesetzt werden, und zwar vorzugsweise solche aus Polyolefin, Polyamid, Polyurethan, Polyester, Gummi und beliebigen Mischungen aus zwei oder mehr der vorgenannten Verbindungen, wie insbesondere aus Polyethylen und/oder Polypropylen. Diese Partikel weisen vorzugsweise einen mittleren Partikeldurchmesser (d₅₀) zwischen 1 µm und 500 µm und bevorzugt von zwischen 10 µm und 150 µm auf. Dabei ist der Polymerfüllstoff in der wenigstens einen Schicht vorzugsweise in einer - auf das Volumen der wenigstens einen Schicht bezogenen - Menge von 0,1 bis 13 Vol.-%, weiter bevorzugt von 1 bis 13 Vol.-% und besonders bevorzugt von 5 bis 13 Vol.-% enthalten.

Alternativ zu den vorstehend genannten Füllstoffen oder zusätzlich dazu können in das Polymer bzw. in die aus dem Polymer gebildete Matrix Fasern eingebettet sein. Die Fasern bestehen vorzugswiese aus einem aus der aus Polyester, Viskose, Baumwolle, Hanf, Aramid, Kohlenstoff, Glas, Polyacrylnitril, Polyamid und beliebigen Kombinationen von zwei oder mehr der vorgenannten Materialien bestehenden Gruppe ausgewählten Material. Dabei können die Fasern in der wenigstens einen Schicht in einer Menge von 1 bis 30 Gew.-%, bevorzugt von 5 bis 30 Gew.-% und besonders bevorzugt von 10 bis 15 Gew.-% enthalten sein. Vorzugsweise weisen die Fasern eine Dicke zwischen 0,1 und 100 µm auf und/oder weisen die Fasern eine Länge zwischen 0,1 und 1.000.000 mm auf.

Erfindungsgemäß enthält der Walzenbezug wenigstens eine die Außenoberfläche des Walzenbezugs bildende Schicht, d.h. der Walzenbezug kann aus dieser einen Schicht bestehen oder zusätzlich zu dieser eine oder mehrere weitere Schicht(en) umfassen.

Gemäß einer bevorzugten Ausführungsform der vorliegenden Erfindung besteht der Walzenbezug aus einer Grundschicht und einer darauf aufgebrachten Deckschicht, wobei die Deckschicht wie vorstehend beschrieben zusammengesetzt ist.

Dabei weist die Deckschicht vorzugsweise eine Dicke zwischen 5 und 25 mm auf.

Gemäß einer dazu alternativen Ausführungsform der vorliegenden Erfindung besteht der Walzenbezug aus einer wie zuvor beschrieben zusammengesetzten Schicht. Bei dieser Ausführungsform beträgt die Dicke der Schicht, d.h. die Dicke des gesamten Walzenbezugs, 5 bis 25 mm.

Ein weiterer Gegenstand der vorliegenden Erfindung ist eine Walze zur Behandlung einer Papier-, Karton-, Tissue- oder einer anderen Faserstoffbahn in einer Maschine zur Herstellung und/oder Veredlung derselben und bevorzugt eine Kalanderwalze und/oder eine Leitwalze, wobei die Walze einen Walzenkern und einen auf dem Walzenkern ausgebildeten und wie vorstehend beschrieben aufgebauten Walzenbezug umfasst.

Zudem betrifft die vorliegende Erfindung die Verwendung einer zuvor beschriebenen Walze in dem Kalander einer Papier-, Karton- oder Tissuemaschine und/oder als Leitwalze im Nass- und Trockenbereich einer Papier-, Karton- oder Tissuemaschine.

Ein weiterer Gegenstand der vorliegenden Erfindung, der jedoch nicht von den Ansprüchen abgedeckt ist, ist eine Zweiphasenpolymerzusammensetzung, welche eine Matrix aus wenigstens einem nicht-fluorierten Epoxidharz enthält, in die Partikel aus einem teilfluorierte oder perfluorierte Polyethergruppen aufweisendem Polymer eingebettet sind, wobei wenigstens ein Teil der Partikel direkt oder über eine Abstandsgruppe kovalent mit dem Matrix-Epoxidharz verbunden ist. Überraschenderweise wurde im Rahmen der vorliegenden Erfindung herausgefunden, dass durch eine solche Zweiphasenstruktur die Glasübergangstemperatur des Matrixpolymers, nämlich des Epoxidharzes, nicht oder allenfalls unwesentlich beeinflusst bzw. erhöht wird. Abgesehen davon weist eine Polymerzusammensetzung mit einer solchen Zweiphasenstruktur überraschenderweise auch eine erhöhte Bruchzähigkeit auf. Zudem weist eine Polymerzusammensetzung mit einer solchen Zweiphasenstruktur aufgrund der Einbettung der Partikel aus dem die teilfluorierten oder perfluorierten Gruppen aufweisenden Polymer auch eine hervorragende Antihafteigenschaft gegenüber Verunreinigungen, welche bei der Papierherstellung auf Papierbahnen vorliegen, auf, und zwar insbesondere auch nach längerer Betriebszeit, d.h. auch nach einem signifikanten Verschleiß bzw. Abrieb der Oberflächenschicht. Aufgrund dessen eignet sich die Zweiphasenpolymerzusammensetzung hervorragend zur Herstellung eines als Bezugs für eine Walze zur Behandlung einer Papier-, Karton-, Tissue- oder einer anderen Faserstoffbahn in einer Maschine zur Herstellung und/oder Veredlung derselben und insbesondere für eine Kalanderwalze einer Papier-, Karton- oder Tissuemaschine und für eine Leitwalze im Nass- und Trockenbereich einer Papier-, Karton- oder Tissuemaschine.

Dabei sind die Partikel vorzugsweise so zusammengesetzt wie dies vorstehend in Bezug auf die Ausführungsform des Walzenbezugs, bei der die wenigstens eine Schicht des Walzenbezugs eine aus dem Polymer gebildete Matrix umfasst, in die Partikel aus einem teilfluorierte oder perfluorierte Gruppen aufweisendem Polymer eingebettet sind, wobei wenigstens ein Teil der Partikel direkt oder über eine Abstandsgruppe kovalent mit dem Matrixpolymer verbunden ist, beschrieben worden ist.

Auch die Matrix der Zweiphasenpolymerzusammensetzung ist vorzugsweise so zusammengesetzt, wie dies vorstehend in Bezug auf die vorgenannte Ausführungsform des Walzenbezugs beschrieben worden ist.

In Weiterbildung des Erfindungsgedankens wird vorgeschlagen, dass die Zweiphasenpolymerzusammensetzung - bezogen auf das Volumen der wenigstens einen Schicht - 1 bis 50 Vol.-%, bevorzugt 2 bis 20 Vol.-% und besonders bevorzugt 5 bis 20 Vol.-% Partikel enthält.

Ferner ist es bevorzugt, wenn wenigstens 10%, bevorzugt wenigstens 25%, insbesondere bevorzugt wenigstens 50%, besonders bevorzugt wenigstens 75%, ganz besonders bevorzugt wenigstens 90% und höchst bevorzugt alle Partikel kovalent mit der Matrix verbunden sind.

Schließlich betrifft die vorliegende Erfindung ein Verfahren zur Herstellung einer Polymerzusammensetzung, welches die nachfolgenden Schritte umfasst, jedoch nicht von den Ansprüchen abgedeckt ist:
a) Reagieren einer Verbindung gemäß der allgemeinen Formel (Ib)

   R⁵-(R¹O)ₘ-(R²O)ₙ-(R³O)ₒ-(R⁴O)ₚ-R⁶ (Ib),

   worin
   R⁵ und R⁶ unabhängig voneinander aus der Gruppe bestehend Amingruppe, Amidgruppen, Amidosilangruppen, Hydroxygruppe, Hydroxyalkylgruppen, alkoxylierten Hydroxyalkylgruppen, Urethan(meth)acrylatgruppen und Phosphatgruppen ausgewählt sind und
   R¹, R², R³, R⁴, m, n, o und p wie vorstehend in Bezug auf die Formel (la) definiert sind
   mit einer Dicarbonsäure, mit einem Carbonsäureanhydrid, mit einem Diamin oder mit einem Diol sowie
b) Reagieren des in dem Schritt a) erhaltenen Produkts mit einer glycidylgruppenterminierten Verbindung und
c) optional Reagieren des in dem Schritt b) erhaltenen Produkts mit einer glycidylgruppenterminierten Verbindung und einem Härter bzw. Vernetzer.

Durch diese Verfahrensschritte wird vollkommen überraschend eine Zweiphasenpolymerzusammensetzung erhalten, und zwar eine, welche eine Matrix aus wenigstens einem nicht-fluorierten Epoxidharz enthält, in die Partikel aus einem teilfluorierte oder perfluorierte Polyethergruppen aufweisendem Polymer eingebettet sind, wobei wenigstens ein Teil der Partikel direkt oder über eine Abstandsgruppe kovalent mit dem Matrix-Epoxidharz verbunden ist. Vermutlich aufgrund der so erhaltenen Zweiphasigkeit der Polymerzusammensetzung findet ebenfalls vollkommen überraschend eine ansonsten zu erwartende negative Beeinflussung der Glasübergangstemperatur der Polymerzusammensetzung infolge des Einbaus der fluorierten Polyethergruppen nicht statt, so dass trotz des Einbaus von Fluorgruppen in das Epoxidharz die Glasübergangstemperatur der durch das erfindungsgemäße Verfahren erhältlichen Zweiphasenpolymerzusammensetzung nahezu unverändert bleibt. Ferner weist die durch das erfindungsgemäße Verfahren erhältliche Zweiphasenpolymerzusammensetzung ebenfalls überraschend eine erhöhte Bruchzähigkeit sowie eine hervorragende Antihafteigenschaft gegenüber Verunreinigungen, welche bei der Papierherstellung auf Papierbahnen vorliegen, auf.

Die vorstehend in Bezug auf den Walzenbezug und die Zweiphasenpolymerzusammensetzung genannten bevorzugen Ausführungsformen gelten auch für das erfindungsgemäße Verfahren.

Insbesondere kann es sich bei dem Härter um ein Diamin oder eine Dicarbonsäure und bevorzugt um ein aromatisches Diamin, ein aliphatisches Diamin, ein cycloaliphatisches Diamin, ein Polyamidoamin oder ein Phthalsäurederivat, wie insbesondere ein Phthalsäureanhydrid, handeln.

Gemäß einer besonders bevorzugten Ausführungsform der vorliegenden Erfindung umfasst das vorstehende Verfahren die nachfolgenden Schritte:
a) Reagieren einer Verbindung gemäß der allgemeinen Formel (Ib)

   R⁵-(R¹O)ₘ-(R²O)ₙ-(R³O)ₒ-(R⁴O)ₚ-R⁶ (Ib),

   worin
   R⁵ und R⁶ unabhängig voneinander eine Hydroxygruppe, eine Hydroxyalkylgruppe, eine Hydroxyalkoxygruppe oder eine Hydroxypolyalkoxygruppe sind und
   R¹, R², R³, R⁴, m, n, o und p wie vorstehend in Bezug auf die Formel (la) definiert sind
   mit einer Dicarbonsäure oder mit einem Carbonsäureanhydrid,
b) Reagieren des in dem Schritt a) erhaltenen Produkts mit einer glycidylgruppenterminierten Verbindung sowie
c) Reagieren des in dem Schritt b) erhaltenen Produkts mit einer glycidylgruppenterminierten Verbindung und einem Härter bzw. Vernetzer, und zwar bevorzugt mit einem Diamin, besonders bevorzugt mit Diethylmethylbenzoldiamin.

Gemäß einer dazu alternativen besonders bevorzugten Ausführungsform der vorliegenden Erfindung umfasst das vorstehende Verfahren die nachfolgenden Schritte:
a) Reagieren einer Verbindung gemäß der allgemeinen Formel (Ib)

   R⁵-(R¹O)ₘ-(R²O)ₙ-(R³O)ₒ-(R⁴O)ₚ-R⁶ (Ib),

   worin
   R⁵ und R⁶ unabhängig voneinander eine Urethan(meth)-acrylatgruppe sind und
   R¹, R², R³, R⁴, m, n, o und p wie vorstehend in Bezug auf die Formel (la) definiert sind
   mit einem Diamin sowie
b) Reagieren des in dem Schritt a) erhaltenen Produkts mit einer glycidylgruppenterminierten Verbindung.

Bei dieser Ausführungsform fungiert das in dem Schritt a) zugesetzte Diamin, welches bevorzugt Diethylmethylbenzoldiamin ist, in dem Schritt b) als Härter bzw. Vernetzer.

Nachfolgend wird die vorliegende Erfindung anhand eines diese erläuternden, aber nicht einschränkenden Beispiels näher erläutert.

### Beispiel

In einem dreistufigen Verfahren wurde eine Zweiphasenpolymerzusammensetzung hergestellt.

Zunächst wurde in einem ersten Schritt eine Mischung aus:
- 1 mol eines hydroxyfunktionellen fluorierten Polyethers mit der Formel HO-(CH₂CH₂O)ₙ-CH₂-CF₂O-(CF₂CF₂O)ₚ(CF₂O)_{q}-CF₂-CH₂-(OCH₂CH₂)ₘ-OH (Handelsprodukt Fluorolink® E10H),
- 2 mol Methyltetrahydrophthalsäureanhydrid und
- 0,05 g 1-Methylimidazol als Katalysator bei 90°C solange reagiert, bis die Säurezahl den Bereich von 61 bis 64 mgKOH/g erreichte und konstant blieb. Die theoretische Säurezahl lag bei 61 mgKOH/g.

Anschließend wurde in einem zweiten Schritt das in dem ersten Schritt hergestellte Produkt mit einem Bisphenol-A-diglycidylether-Harz umgesetzt. Dabei wurde eine Mischung aus:
- 519,94 g des in dem ersten Schritt erhaltenen Produkts,
- 778,24 g des Handelsprodukts Araldit XB 3585 (Bisphenol-A-diglycidylether-Harz) und
- 0,05 g 1-Methylimidazol als Katalysator
bei 120°C solange reagiert, bis die Säurezahl einen Wert von kleiner als 1 mgKOH/g erreichte und ein Epoxyäquivalentgewicht von 340 bis 360 g erreicht worden ist. Dabei ergibt sich unter Berücksichtigung des Epoxyäquivalentgewichtes von Araldit XB 3585 von 180 und einer Säurezahl des Produkts aus dem ersten Schritt von 61,26 mgKOH/g ein theoretisches Epoxyäquivalentgewicht von 345,27.

Danach wurde in einem dritten Schritt das in dem zweiten Schritt hergestellte Produkt mit einem Bisphenol-A-diglycidylether-Harz umgesetzt und ausgehärtet. Dabei wurde eine Mischung aus:
- 786,6 g des Handelsprodukts Araldit XB 3585 (Bisphenol-A-diglycidylether-Harz),
- 192,6 g des in dem zweiten Schritt erhaltenen Produkts und
- 220,8 g Diethylmethylbenzoldiamin (DETDA 80) als Vernetzer
mit folgendem Temperaturprofil umgesetzt und ausgehärtet: Erwärmen der Mischung von 70°C auf 140°C innerhalb von 5 Stunden, Halten der Temperatur bei 140°C für 7 Stunden und Abkühlen von 140°C auf 70°C innerhalb von 5 Stunden.

Es wurde vollkommen überraschend nach der Aushärtung eine Zweiphasenpolymerzusammensetzung erhalten, welche eine Matrix aus einem nicht-fluorierten Epoxidharz auf Basis von Bisphenol-A-diglycidylether enthielt, in die Partikel aus einem die fluorierten Polyethergruppen aufweisendem Polymer eingebettet waren, wobei alle der Partikel mit dem Matrix-Epoxidharz kovalent verbunden waren. Dabei betrug der Fluoratomgehalt, bezogen auf das Gesamtgewicht des Polymers bzw. der Zweiphasenpolymerzusammensetzung, etwa 3 Gew.-%.

Die so hergestellte Zweiphasenpolymerzusammensetzung wies die in der untenstehenden Tabelle zusammengefassten Eigenschaften auf.

### Vergleichsbeispiel

Es wurde eine Polymerzusammensetzung wie in dem vorstehenden Beispiel beschrieben hergestellt, ausgenommen, dass keine Fluorpolyetherverbindung eingesetzt wurde, also die beiden ersten Schritte weggelassen wurden.

Es wurde eine Mischung aus:
- 100,0 g des Handelsprodukts Araldit XB 3585 (Bisphenol-A-diglycidylether-Harz) und
- 24,76 g Diethylmethylbenzoldiamin (DETDA 80) als Vernetzer
mit folgendem Temperaturprofil umgesetzt und ausgehärtet: Erwärmen der Mischung von 70°C auf 140°C innerhalb von 5 Stunden, Halten der Temperatur bei 140°C für 7 Stunden und Abkühlen von 140°C auf 70°C innerhalb von 5 Stunden.

Im Unterschied zu der in dem Beispiel erhaltenen Zweiphasenpolymerzusammensetzung wurde bei dem Vergleichsbeispiel eine Einphasenpolymerzusammensetzung aus nicht fluoriertem Epoxidharz erhalten.

Die so hergestellte Einphasenpolymerzusammensetzung wies die in der untenstehenden Tabelle zusammengefassten Eigenschaften auf.

| | **Zusammensetzung des Beispiels** | **Zusammensetzung des Vergleichsbei spiels** |
|---|---|---|
| **Grenzflächenenergie** | 18,2 mN/m | 48,4 mN/m |
| **Biegemodul** | 2377 MPa | 2672 MPa |
| **Bruchbiegedehnung** | 8% | 8% |
| **Bruchbiegespannung** | 117 MPa | 141 MPa |
| **Glasübergangstemperatur** | 163,6°C | 158,0°C |
| **Bruchzähigkeit** | 0,672 MPa · m^{1/2} | 0,56 MPa · m^{1/2} |

Durch die erfindungsgemäß vorgesehene kovalente Anbindung von Fluorethergruppen an ein Epoxidharz wird vollkommen überraschend nach der Aushärtung eine Zweiphasenpolymerzusammensetzung erhalten, welche eine Matrix aus einem nicht-fluorierten Epoxidharz enthält, in die Partikel aus einem die fluorierten Polyethergruppen aufweisendem Polymer eingebettet sind, wobei alle der Partikel mit dem Matrix-Epoxidharz kovalent verbunden sind. Vermutlich aufgrund der so erhaltenen Zweiphasigkeit der Polymerzusammensetzung findet ebenfalls vollkommen überraschend eine ansonsten zu erwartende negative Beeinflussung der Glasübergangstemperatur der Polymerzusammensetzung infolge des Einbaus der fluorierten Polyethergruppen nicht statt, so dass trotz des Einbaus von Fluorgruppen in das Epoxidharz die Glasübergangstemperatur der Polymerzusammensetzung des Beispiels nahezu gleich blieb. Ferner weist die erfindungsgemäße Polymerzusammensetzung ebenfalls überraschend - wie aus der vorstehenden Tabelle ersichtlich - eine erhöhte Bruchzähigkeit auf.

Wie sich zudem aus den in der Tabelle angegebenen Werten ergibt, werden durch die erfindungsgemäß vorgesehene kovalente Anbindung von Fluorethergruppen an ein Epoxidharz die mechanischen Eigenschaften der Polymerzusammensetzung nicht oder allenfalls unwesentlich beeinträchtigt, aber die Grenzflächenenergie drastisch reduziert und so eine hervorragende Antihafteigenschaft erreicht. Aus diesem Grund eignet sich diese Polymerzusammensetzung hervorragend zur Herstellung eines Walzenbezugs, insbesondere für eine Kalanderwalze und/oder eine Leitwalze zur Behandlung einer Papier-, Karton-, Tissue- oder einer anderen Faserstoffbahn in einer Maschine zur Herstellung und/oder Veredlung derselben, da diese zum einen die geforderten mechanischen Eigenschaften aufweist und zum anderen an dieser keine Verunreinigungen anlagern.

## Patentansprüche

1. Kalanderwalze oder Leitwalze, mit einem Walzenkern und einem auf dem Walzenkern ausgebildeten Walzenbezug zur Behandlung einer Papier-, Karton-, Tissue- oder einer anderen Faserstoffbahn in einer Maschine zur Herstellung und/oder Veredlung derselben, welcher wenigstens eine die Außenoberfläche des Walzenbezugs bildende Schicht mit einer Dicke von wenigstens 2 mm umfasst, wobei die wenigstens eine Schicht aus wenigstens einem Epoxidharz gebildet ist oder eine Matrix aus wenigstens einem Epoxidharz enthält, **dadurch gekennzeichnet, dass** das wenigstens eine Epoxidharz kovalent gebundene teilfluorierte oder perfluorierte Gruppen aufweist, wobei die teilfluorierten oder perfluorierten Gruppen über das Volumen des Walzenbezugs gleichmäßig verteilt sind.

2. Walze nach Anspruch 1,
**dadurch gekennzeichnet, dass**
das wenigstens eine Epoxidharz, bezogen auf das Gesamtgewicht des Epoxidharz, einen Gehalt an Fluoratomen von 0,1 bis 10 Gew.-%, bevorzugt von 0,5 bis 7,5 Gew.-%, besonders bevorzugt von 1 bis 5 Gew.-% und ganz besonders bevorzugt von 2 bis 4 Gew.-% aufweist.

3. Walze nach Anspruch 1 oder 2,
**dadurch gekennzeichnet, dass**
das wenigstens eine Epoxidharz eine oder mehrere kovalent gebundene Polyethergruppen gemäß der folgenden allgemeinen Formel (la) enthält:
-(R'O)ₘ-(R²O)ₙ-(R³O)ₒ-(R⁴O)ₚ- (Ia),
worin:
wenigstens einer und bevorzugt wenigstens zwei und besonders bevorzugt alle von R¹, R², R³ und R⁴ unabhängig voneinander ein teilfluorierter oder perfluorierter Alkylrest, ein teilfluorierter oder perfluorierter Alkenylrest, ein teilfluorierter oder perfluorierter Alkinylrest, ein teilfluorierter oder perfluorierter Cycloalkylrest, ein teilfluorierter oder perfluorierter Arylrest oder ein teilfluorierter oder perfluorierter Aralkylrest ist/sind,
jeder von R¹, R², R³ und R⁴, der kein teilfluorierter oder perfluorierter Rest ist, unabhängig voneinander ein Alkylrest, Alkenylrest, Alkinylrest, Cycloalkylrest, Arylrest oder Aralkylrest ist,
m eine ganze Zahl zwischen 2 und 10.000, bevorzugt zwischen 2 und 1.000, besonders bevorzugt zwischen 5 und 100 und ganz besonders bevorzugt zwischen 10 und 50 ist und
jeder von n, o und p eine ganze Zahl zwischen 0 und 10.000, bevorzugt zwischen 0 und 1.000, besonders bevorzugt zwischen 5 und 100 und ganz besonders bevorzugt zwischen 10 und 50 ist.

4. Walze nach Anspruch 3,
**dadurch gekennzeichnet, dass**
das wenigstens eine Epoxidharz eine oder mehrere kovalent gebundene Polyethergruppen gemäß der folgenden allgemeinen Formel (IIIa) enthält:
-CF₂O-(CF₂CF₂O)ₘ(CF₂O)ₙ-CF₂- (IIIa),
worin:
m und n unabhängig voneinander eine ganze Zahl zwischen 2 und 10.000, bevorzugt zwischen 2 und 1.000, besonders bevorzugt zwischen 5 und 100 und ganz besonders bevorzugt zwischen 10 und 50 sind.

5. Walze nach zumindest einem der vorstehenden Ansprüche,
**dadurch gekennzeichnet, dass**
die wenigstens eine Schicht eine aus dem wenigstens einen Epoxidharz gebildete Matrix umfasst und in die Matrix Partikel aus einem teilfluorierte oder perfluorierte Gruppen aufweisendem Polymer eingebettet sind, wobei wenigstens ein Teil der Partikel direkt oder über eine Abstandsgruppe kovalent mit dem Epoxidharz der Matrix verbunden ist.

6. Walze nach Anspruch 5,
**dadurch gekennzeichnet, dass**
die Partikel aus einem teilfluorierte oder perfluorierte Polyethergruppen enthaltendem Polymer zusammengesetzt sind.

7. Walze nach Anspruch 6,
**dadurch gekennzeichnet, dass**
die Partikel aus wenigstens einem Polymer zusammengesetzt sind, welches wenigstens eine Gruppe gemäß der folgenden allgemeinen Formel (la) enthält:
-(R¹O)ₘ-(R²O)ₙ-(R³O)ₒ-(R⁴O)ₚ- (Ia),
worin:
wenigstens einer und bevorzugt wenigstens zwei und besonders bevorzugt alle von R¹, R², R³ und R⁴ unabhängig voneinander ein teilfluorierter oder perfluorierter Alkylrest, ein teilfluorierter oder perfluorierter Alkenylrest, ein teilfluorierter oder perfluorierter Alkinylrest, ein teilfluorierter oder perfluorierter Cycloalkylrest, ein teilfluorierter oder perfluorierter Arylrest oder ein teilfluorierter oder perfluorierter Aralkylrest ist/sind,
jeder von R¹, R², R³ und R⁴, der kein teilfluorierter oder perfluorierter Rest ist, unabhängig voneinander ein Alkylrest, Alkenylrest, Alkinylrest, Cycloalkylrest, Arylrest oder Aralkylrest ist,
m eine ganze Zahl zwischen 2 und 10.000, besonders bevorzugt zwischen 5 und 100 und ganz besonders bevorzugt zwischen 10 und 50 ist und jeder von n, o und p eine ganze Zahl zwischen 0 und 10.000, bevorzugt zwischen 0 und 1.000, besonders bevorzugt zwischen 5 und 100 und ganz besonders bevorzugt zwischen 10 und 50 ist.

8. Walze nach Anspruch 7,
**dadurch gekennzeichnet, dass**
die Partikel aus einem Polymer zusammengesetzt sind, welches wenigstens eine Gruppe gemäß der folgenden allgemeinen Formel (IIa) enthält:
-CF₂O-((CF₂)ₐO)ₘ-((CF₂)_{b}O)ₙ-((CF₂)_{c}O)ₒ-((CF₂)_{d}O)ₚ-CF₂- (IIa),
worin:
a eine ganze Zahl zwischen 1 und 12, bevorzugt zwischen 1 und 6, besonders bevorzugt zwischen 1 und 4 und ganz besonders bevorzugt von 1, 2 oder 3 ist,
jeder von b, c und d unabhängig voneinander eine ganze Zahl zwischen 1 und 6 und bevorzugt zwischen 1 und 4 ist, mit der Maßgabe, dass b ungleich a ist, c ungleich b ist und d ungleich c ist,
m eine ganze Zahl zwischen 2 und 10.000, bevorzugt zwischen 2 und 1.000, besonders bevorzugt zwischen 5 und 100 und ganz besonders bevorzugt zwischen 10 und 50 ist und
jeder von n, o und p eine ganze Zahl zwischen 0 und 10.000, bevorzugt zwischen 0 und 1.000, besonders bevorzugt zwischen 5 und 100 und ganz besonders bevorzugt zwischen 10 und 50 ist.

9. Walze nach Anspruch 8,
**dadurch gekennzeichnet, dass**
die Partikel aus einem Polymer zusammengesetzt sind, welches wenigstens eine Gruppe gemäß der folgenden allgemeinen Formel (IIIa) enthält:
-CF₂O-(CF₂CF₂O)ₘ(CF₂O)ₙ-CF₂- (IIIa),
worin:
m und n unabhängig voneinander eine ganze Zahl zwischen 2 und 10.000, bevorzugt zwischen 2 und 1.000, besonders bevorzugt zwischen 5 und 100 und ganz besonders bevorzugt zwischen 10 und 50 sind.

10. Walze nach zumindest einem der Ansprüche 7 bis 9,
**dadurch gekennzeichnet, dass**
die Gruppe gemäß der folgenden allgemeinen Formel (la), (IIa) und (IIIa) an ihren beiden terminalen Enden jeweils über eine Verbindungsgruppe mit mindestens einer Hydroxyethergruppe verbunden ist, wobei die Verbindungsgruppe eine an ihren beiden Termini durch jeweils eine Estergruppe terminierte Alkyl-, Alkenyl-, Alkyinyl-, Aryl- oder Aralkylgruppe ist und bevorzugt eine Phthalsäurediestergruppe ist.

11. Walze nach zumindest einem der Ansprüche 5 bis 10,
**dadurch gekennzeichnet, dass**
die Partikel mit dem die Matrix ausbildendem Epoxidharz über eine Abstandsgruppe verbunden sind, welche an ihren beiden Enden durch jeweils eine Amingruppe terminiert wird.

12. Verwendung einer Walze in einem Kalander einer Papier-, Karton- oder Tissuemaschine und/oder als Leitwalze im Nass- und Trockenbereich einer Papier-, Karton- oder Tissuemaschine, wobei die Walze nach einem der vorangegangenen Ansprüche eingerichtet ist.

## Claims

1. Calender roll or guide roll, with a roll core and with, formed on the roll core, a roll covering which is intended for the treatment of a paper web, paperboard web, tissue web or other web of fibrous material in a machine for the production and/or finishing of the same and which comprises at least one layer of thickness at least 2 mm forming the external surface of the roll covering, where the at least one layer is composed of at least one epoxy resin or comprises a matrix made of at least one epoxy resin, **characterized in that** the at least one epoxy resin has covalently bonded partially fluorinated or perfluorinated groups, where the partially fluorinated or perfluorinated groups have a uniform distribution through the volume of the roll covering.

2. Roll according to Claim 1,
**characterized in that**
the at least one epoxy resin has, based on the total weight of the epoxy resin, from 0.1 to 10% by weight content of fluorine atoms, preferably from 0.5 to 7,5% by weight, particularly preferably from 1 to 5% by weight and very particularly preferably from 2 to 4% by weight.

3. Roll according to Claim 1 or 2,
**characterized in that**
the at least one epoxy resin comprises one or more covalently bonded polyether groups in accordance with the following general formula (Ia):
-(R¹O)ₘ-(R²O)ₙ-(R³O)ₒ-(R⁴O)ₚ- (Ia),
in which:
at least one of, and preferably at least two of, in particular preferably all of, R¹, R², R³ and R⁴ is/are mutually independently a partially fluorinated or perfluorinated alkyl moiety, a partially fluorinated or perfluorinated alkenyl moiety, a partially fluorinated or perfluorinated alkynyl moiety, a partially fluorinated or perfluorinated cycloalkyl moiety, a partially fluorinated or perfluorinated aryl moiety or a partially fluorinated or perfluorinated aralkyl moiety,
each of R¹, R², R³ and R⁴ that is not a partially fluorinated or perfluorinated moiety is mutually independently an alkyl moiety, alkenyl moiety, alkynyl moiety, cycloalkyl moiety, aryl moiety or aralkyl moiety,
m is an integer from 2 to 10,000, preferably from 2 to 1,000, particularly preferably from 5 to 100 and very particularly preferably from 10 to 50 and each of n, o and p is an integer from 0 to 10,000, preferably from 0 to 1,000, particularly preferably from 5 to 100 and very particularly preferably from 10 to 50.

4. Roll according to Claim 3,
**characterized in that**
the at least one epoxy resin comprises one or more covalently bonded polyether groups in accordance with the following general formula (IIIa):
-CF₂O-(CF₂CF₂O)ₘ(CF₂O)ₙ-CF₂- (IIIa),
in which:
m and n are mutually independently an integer from 2 to 10,000, preferably from 2 to 1,000, particularly preferably from 5 to 100 and very particularly preferably from 10 to 50.

5. Roll according to at least one of the preceding claims,
**characterized in that**
the at least one layer comprises a matrix composed of the at least one epoxy resin, and particles made of a polymer having partially fluorinated or perfluorinated groups have been embedded into the matrix, where at least a portion of the particles has covalent bonding to the epoxy resin of the matrix, directly or by way of a spacer group.

6. Roll according to Claim 5,
**characterized in that**
the particles are composed of a polymer comprising partially fluorinated or perfluorinated polyether groups.

7. Roll according Claim 6,
**characterized in that**
the particles are composed of at least one polymer which comprises at least one group in accordance with the following general formula (Ia):
-(R¹O)ₘ-(R²O)ₙ-(R³O)ₒ-(R⁴O)ₚ- (Ia),
in which:
at least one of, and preferably at least two of, in particular preferably all of, R¹, R², R³ and R⁴ is/are mutually independently a partially fluorinated or perfluorinated alkyl moiety, a partially fluorinated or perfluorinated alkenyl moiety, a partially fluorinated or perfluorinated alkynyl moiety, a partially fluorinated or perfluorinated cycloalkyl moiety, a partially fluorinated or perfluorinated aryl moiety or a partially fluorinated or perfluorinated aralkyl moiety,
each of R¹, R², R³ and R⁴ that is not a partially fluorinated or perfluorinated moiety is mutually independently an alkyl moiety, alkenyl moiety, alkynyl moiety, cycloalkyl moiety, aryl moiety or aralkyl moiety,
m is an integer from 2 to 10,000, particularly preferably from 5 to 100 and very particularly preferably from 10 to 50 and
each of n, o and p is an integer from 0 to 10,000, preferably from 0 to 1,000, particularly preferably from 5 to 100 and very particularly preferably from 10 to 50.

8. Roll according to Claim 7,
**characterized in that**
the particles are composed of a polymer which comprises at least one group in accordance with the following general formula (IIa):
-CF₂O-((CF₂)ₐO)ₘ-((CF₂)_{b}O)ₙ-((CF₂)_{c}O)ₒ-((CF₂)_{d}O)ₚ-CF₂- (IIa),
in which:
a is an integer from 1 to 12, preferably from 1 to 6, particularly preferably from 1 to 4 and which is very particularly preferably 1, 2 or 3,
each of b, c and d is mutually independently an integer from 1 to 6 and preferably from 1 to 4, with the proviso that b is not equal to a, c is not equal to b and d is not equal to c,
m is an integer from 2 to 10,000, preferably from 2 to 1,000, particularly preferably from 5 to 100 and very particularly preferably from 10 to 50 and each of n, o and p is an integer from 0 to 10,000, preferably from 0 to 1,000, particularly preferably from 5 to 100 and very particularly preferably from 10 to 50.

9. Roll according to Claim 8,
**characterized in that**
the particles are composed of a polymer which comprises at least one group in accordance with the following general formula (IIIa):
-CF₂O-(CF₂CF₂O)ₘ(CF₂O)ₙ-CF₂- (IIIa),
in which:
m and n are mutually independently an integer from 2 to 10,000, preferably from 2 to 1,000, particularly preferably from 5 to 100 and very particularly preferably from 10 to 50.

10. Roll according to at least one of Claims 7 to 9,
**characterized in that**
the group in accordance with the following general formula (Ia), (IIa) or (IIIa) has, respectively at its two terminal ends, bonding by way of a connecting group to at least one hydroxyether group, where the connecting group is an alkyl, alkenyl, alkynyl, aryl or aralkyl group respectively terminated at its two termini by an ester group, and is preferably a phthalicdiester group.

11. Roll according to at least one of Claims 5 to 10,
**characterized in that**
the bonding of the particles to the epoxy resin forming the matrix is provided by way of a spacer group which is terminated at each of its two ends by an amine group.

12. Use of a roll in a calender of a machine for making paper, paperboard or tissue, and/or as guide roll in the wet or dry region of a machine for making paper, paperboard or tissue, where the roll is configured according to any of the preceding claims.

## Revendications

1. Cylindre de calandre ou cylindre conducteur, comprenant un noyau de cylindre et un revêtement de cylindre formé sur le noyau de cylindre, pour le traitement d'une bande en papier, carton, papier-tissu ou d'une autre bande fibreuse dans une machine pour la fabrication et/ou le raffinage de celle-ci, qui comprend au moins une couche d'une épaisseur d'au moins 2 mm formant la surface extérieure du revêtement de cylindre, ladite au moins une couche étant formée par au moins une résine époxyde ou contenant une matrice en au moins une résine époxyde, **caractérisé en ce que** ladite au moins une résine époxyde comprend des groupes partiellement fluorés ou perfluorés reliés par des liaisons covalentes, les groupes partiellement fluorés ou perfluorés étant répartis uniformément dans le volume du revêtement de cylindre.

2. Cylindre selon la revendication 1, **caractérisé en ce que** ladite au moins une résine époxyde présente, par rapport au poids total de la résine époxyde, une teneur en atomes de fluor de 0,1 à 10 % en poids, de préférence de 0,5 à 7,5 % en poids, de manière particulièrement préférée de 1 à 5 % en poids et de manière tout particulièrement préférée de 2 à 4 % en poids.

3. Cylindre selon la revendication 1 ou 2, **caractérisé en ce que** ladite au moins une résine époxyde contient un ou plusieurs groupes polyéther reliés par des liaisons covalentes, selon la formule générale (Ia) suivante :
-(R¹O)ₘ-(R²O)ₙ-(R³O)ₒ-(R⁴O)ₚ- (Ia)
dans laquelle :
au moins un des, et de préférence au moins deux des, et de manière particulièrement préférée tous les radicaux R¹, R², R³ et R⁴ sont indépendamment les uns des autres un radical alkyle partiellement fluoré ou perfluoré, un radical alcényle partiellement fluoré ou perfluoré, un radical alcynyle partiellement fluoré ou perfluoré, un radical cycloalkyle partiellement fluoré ou perfluoré, un radical aryle partiellement fluoré ou perfluoré ou un radical aralkyle partiellement fluoré ou perfluoré, les radicaux R¹, R², R³ et R⁴ qui ne sont pas des radicaux partiellement fluorés ou perfluorés sont chacun indépendamment les uns des autres un radical alkyle, un radical alcényle, un radical alcynyle, un radical cycloalkyle, un radical aryle ou un radical aralkyle,
m est un nombre entier compris entre 2 et 10 000, de préférence entre 2 et 1 000, de manière particulièrement préférée entre 5 et 100, et de manière tout particulièrement préférée entre 10 et 50, et
n, o et p sont chacun un nombre entier compris entre 0 et 10 000, de préférence entre 0 et 1 000, de manière particulièrement préférée entre 5 et 100, et de manière tout particulièrement préférée entre 10 et 50.

4. Cylindre selon la revendication 3, **caractérisé en ce que** ladite au moins une résine époxyde contient un ou plusieurs groupes polyéther reliés par des liaisons covalentes selon la formule générale (IIIa) suivante :
-CF₂O-(CF₂CF₂O)ₘ(CF₂O)ₙ-CF₂- (IIIa)
dans laquelle :
m et n sont indépendamment l'un de l'autre un nombre entier compris entre 2 et 10 000, de préférence entre 2 et 1 000, de manière particulièrement préférée entre 5 et 100, et de manière tout particulièrement préférée entre 10 et 50.

5. Cylindre selon au moins l'une quelconque des revendications précédentes, **caractérisé en ce que** ladite au moins une couche comprend une matrice formée par ladite au moins une résine époxyde et des particules en un polymère comprenant des groupes partiellement fluorés ou perfluorés sont incorporées dans la matrice, au moins une partie des particules étant reliées par des liaisons covalentes directement ou par le biais d'un groupe espaceur avec la résine époxyde de la matrice.

6. Cylindre selon la revendication 5, **caractérisé en ce que** les particules sont composées par un polymère contenant des groupes polyéther partiellement fluorés ou perfluorés.

7. Cylindre selon la revendication 6, **caractérisé en ce que** les particules sont composées par au moins un polymère qui contient au moins un groupe selon la formule générale (Ia) suivante :
-(R¹O)ₘ-(R²O)ₙ-(R³O)ₒ-(R⁴O)ₚ- (Ia)
dans laquelle :
au moins un des, et de préférence au moins deux des, et de manière particulièrement préférée tous les radicaux R¹, R², R³ et R⁴ sont indépendamment les uns des autres un radical alkyle partiellement fluoré ou perfluoré, un radical alcényle partiellement fluoré ou perfluoré, un radical alcynyle partiellement fluoré ou perfluoré, un radical cycloalkyle partiellement fluoré ou perfluoré, un radical aryle partiellement fluoré ou perfluoré ou un radical aralkyle partiellement fluoré ou perfluoré, les radicaux R¹, R², R³ et R⁴ qui ne sont pas des radicaux partiellement fluorés ou perfluorés sont chacun indépendamment les uns des autres un radical alkyle, un radical alcényle, un radical alcynyle, un radical cycloalkyle, un radical aryle ou un radical aralkyle,
m est un nombre entier compris entre 2 et 10 000, de manière particulièrement préférée entre 5 et 100, et de manière tout particulièrement préférée entre 10 et 50, et
n, o et p sont chacun un nombre entier compris entre 0 et 10 000, de préférence entre 0 et 1 000, de manière particulièrement préférée entre 5 et 100, et de manière tout particulièrement préférée entre 10 et 50.

8. Cylindre selon la revendication 7, **caractérisé en ce que** les particules sont composées par un polymère qui contient au moins un groupe selon la formule générale (IIa) suivante :
-CF₂O-((CF₂)ₐO)ₘ-((CF₂)_{b}O)ₙ-((CF₂)_{c}O)ₒ-((CF₂)_{d}O)ₚ-CF₂- (IIa)
dans laquelle :
a est un nombre entier compris entre 1 et 12, de préférence entre 1 et 6, de manière particulièrement préférée entre 1 et 4 et de manière tout particulièrement préférée de 1, 2 ou 3,
b, c et d sont chacun indépendamment les uns des autres un nombre entier compris entre 1 et 6, et de préférence entre 1 et 4, à condition que b soit différent de a, que c soit différent de b et que d soit différent de c, m est un nombre entier compris entre 2 et 10 000, de préférence entre 2 et 1 000, de manière particulièrement préférée entre 5 et 100 et de manière tout particulièrement préférée entre 10 et 50, et
n, o et p sont chacun un nombre entier compris entre 0 et 10 000, de préférence entre 0 et 1 000, de manière particulièrement préférée entre 5 et 100 et de manière tout particulièrement préférée entre 10 et 50.

9. Cylindre selon la revendication 8, **caractérisé en ce que** les particules sont composées par un polymère qui contient au moins un groupe selon la formule générale (IIIa) suivante :
-CF₂O-(CF₂CF₂O)ₘ(CF₂O)ₙ-CF₂- (IIIa)
dans laquelle :
m et n sont indépendamment l'un de l'autre un nombre entier compris entre 2 et 10 000, de préférence entre 2 et 1 000, de manière particulièrement préférée entre 5 et 100, et de manière tout particulièrement préférée entre 10 et 50.

10. Cylindre selon au moins l'une quelconque des revendications 7 à 9, **caractérisé en ce que** le groupe selon les formules générales (Ia), (IIa) et (IIIa) suivantes est relié à ses deux extrémités terminales à chaque fois par le biais d'un groupe de liaison avec au moins un groupe hydroxyéther, le groupe de liaison étant un groupe alkyle, alcényle, alcynyle, aryle ou aralkyle terminé à ses deux terminaisons à chaque fois par un groupe ester, et de préférence un groupe diester de l'acide phtalique.

11. Cylindre selon au moins l'une quelconque des revendications 5 à 10, **caractérisé en ce que** les particules sont reliées avec la résine époxyde formant la matrice par le biais d'un groupe espaceur, qui est terminé à ses deux extrémités à chaque fois par un groupe amino.

12. Utilisation d'un cylindre dans une calandre d'une machine à papier, carton ou papier-tissu et/ou en tant que cylindre conducteur dans la zone humide et sèche d'une machine à papier, carton ou papier-tissu, le cylindre étant conçu selon l'une quelconque des revendications précédentes.
